(19) Europäisches Patentamt
European Patent Office
Office européen des brevets

(11) **EP 4 141 525 B1**

(12) **EUROPEAN PATENT SPECIFICATION**

(45) Date of publication and mention of the grant of the patent:
**12.08.2026 Bulletin 2026/33**

(21) Application number: **21793087.4**

(22) Date of filing: **22.04.2021**

(51) International Patent Classification (IPC):
***G02F 1/1333*** (2006.01) ***G02B 5/30*** (2006.01)
***G02F 1/13363*** (2006.01) ***G02B 1/14*** (2015.01)

(52) Cooperative Patent Classification (CPC):
**G02B 1/14; G02B 5/3083; G02F 1/133331; G02F 1/133638;** G02F 2202/40

(86) International application number:
**PCT/JP2021/016367**

(87) International publication number:
**WO 2021/215515 (28.10.2021 Gazette 2021/43)**

(54) **LIQUID CRYSTAL DISPLAY PROTECTIVE PLATE, LIQUID CRYSTAL DISPLAY PROTECTIVE PLATE WITH CURVED SURFACE, AND METHOD FOR PRODUCING THE SAME**

FLÜSSIGKRISTALLANZEIGESCHUTZPLATTE, FLÜSSIGKRISTALLANZEIGESCHUTZPLATTE MIT GEKRÜMMTER OBERFLÄCHE, DAZUGEHÖRIGES HERSTELLUNGSVERFAHREN

PLAQUE DE PROTECTION D’AFFICHEUR À CRISTAUX LIQUIDES, PLAQUE DE PROTECTION D’AFFICHEUR À CRISTAUX LIQUIDES À SURFACE COURBÉE, ET SA MÉTHODE DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2020 JP 2020077644**
**25.12.2020 JP 2020216445**

(43) Date of publication of application:
**01.03.2023 Bulletin 2023/09**

(73) Proprietor: **Kuraray Co., Ltd.**
**Kurashiki-shi, Okayama 710-0801 (JP)**

(72) Inventors:
- **OZAWA, Yushi**
**Tainai-shi, Niigata 959-2691 (JP)**
- **YAMANO, Masaharu**
**Tainai-shi, Niigata 959-2691 (JP)**

(74) Representative: **Müller-Boré & Partner Patentanwälte PartG mbB**
**Friedenheimer Brücke 21**
**80639 München (DE)**

(56) References cited:
**WO-A1-2019/216068**
**JP-A- 2000 329 942**
**JP-A- 2005 091 825**
**JP-A- 2008 224 829**
**JP-A- 2017 125 112**
**US-A1- 2010 060 833**
**US-A1- 2011 013 346**
**US-A1- 2016 326 289**
**US-A1- 2018 329 256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 141 525 B1

## Description

Technical Field

The present invention related to a liquid crystal display protective plate, a liquid crystal display protective plate with a curved surface, and a method for producing the same.

Background Art

In liquid crystal displays and touch panel displays that combine such liquid crystal displays with touch panels, a protective plate may be provided on the front side thereof to prevent scratches on the surface. In the present description, this protective plate is called a "liquid crystal display protective plate."

The liquid crystal display protective plate includes a resin plate formed of at least one thermoplastic resin layer, and, if necessary, a cured coating film formed on at least one surface of the resin plate.

Patent Literature 1 discloses a scratch-resistant resin plate suitable as a display window protective plate for portable-type information terminals, including a methacrylic resin plate and a cured coating film formed on at least one surface thereof (Claims 1, 2, and 7, paragraph [0010], etc.). Patent Literature 2 discloses a polycarbonate resin laminate for a liquid crystal display cover including a laminate plate in which a methacrylic resin layer is laminated on one surface of a polycarbonate resin layer and a cured coating film formed on the methacrylic resin layer of this laminate plate (Claim 1, paragraph [0008], etc.).

A liquid crystal display protective plate is disposed on the front side (the viewer side) of the liquid crystal display, and a viewer views the screen of the liquid crystal display through this protective plate. Here, since the liquid crystal display protective plate hardly changes the polarization property of emitted light from the liquid crystal display, when the screen is viewed through a polarizing filter such as polarized sunglasses, the screen may become darker depending on an angle between the polarization axis of the emitted light and the transmission axis of the polarizing filter, and hence the visibility of images may deteriorate (blackout phenomenon).

Therefore, a liquid crystal display protective plate that can suppress the deterioration of the visibility of images has been studied in the case where the screen of the liquid crystal display is viewed through the polarizing filter. For example, Patent Literature 3 discloses a liquid crystal display protective plate formed of a scratch-resistant resin plate including a cured coating film formed on at least one surface of the resin plate and having an in-plane retardation value (also referred to as a "Re value") of 85 to 300 nm (Claim 1).

WO 2019/216068 A1 describes a polarizing plate and a display device. JP 2000-329942 A describes a polarizing light transmission plate and a polarization plane light source. US 2016/0326289 A1 describes an optical thermoplastic resin and a formed body. US 2018/0329256 A1 describes a polarizing plate and a liquid crystal display device. US 2010/0060833 A1 describes a liquid crystal display protection plate.

Citation List

Patent Literature

Patent Literature 1: Japanese Unexamined Patent Application Publication No. 2004-299199
Patent Literature 2: Japanese Unexamined Patent Application Publication No. 2006-103169
Patent Literature 3: Japanese Unexamined Patent Application Publication No. 2010-085978
Patent Literature 4: Japanese Unexamined Patent Application Publication No. 2018-103518


Summary of Invention

Technical Problem

In recent years, in applications such as in-vehicle car navigation systems and display audio, displays that are subjected to a shaping process such as a curved-surface processing have been developed from the viewpoint of their design and visibility. For displays having curved surfaces, liquid crystal display protective plates with curved surfaces are used to match the shape of each display. After a cured coating film is formed, if necessary, on a flat resin plate obtained by extrusion or the like, thermoforming such as press forming, vacuum forming, and pressure forming can be performed to produce a liquid crystal display protective plate with a curved surface. The resin plate included in the liquid crystal display protective plate preferably has a Re value within a suitable range both before and after thermoforming, and a small

variation in the Re value.

An object of Patent Literature 4 is to provide a resin laminate (resin plate) that has excellent thermoformability at a low temperature or printability and suppresses the occurrence of coloring and color unevenness after thermoforming.

Patent Literature 4 discloses a resin laminate in which an acrylic resin layer is laminated on at least one side of a polycarbonate resin layer by co-extrusion, with a heat shrinkage in the width direction of -10 to 0%, a heat shrinkage in the extrusion direction of 0 to 10%, and a Re value of 1,500 nm or less (Claim 1).

In Patent Literature 4, the polycarbonate resin has a terminal structure derived from a specific monohydric phenol to lower a glass transition temperature of the polycarbonate resin, resulting in thermoformability at a low temperature (paragraph [0018]).

The resin laminate described in Patent Literature 4 preferably has an additional hard coat layer on the acrylic resin layer (Claim 7).

In Patent Literatures 3 and 4, resin plates are preferably laminate plates in which a methacrylic resin layer is laminated on at least one surface of the polycarbonate resin layer (Claim 6 in Patent Literature 3 and paragraph [0096] in Patent Literature 4). In these laminate plates, for example, the birefringence of the polycarbonate resin layer can be adjusted by adjusting molding conditions depending on the thickness of the resin plate, and a Re value of a liquid crystal display protective plate can be adjusted within a suitable range (paragraph [0036] in Patent Literature 3, etc.).

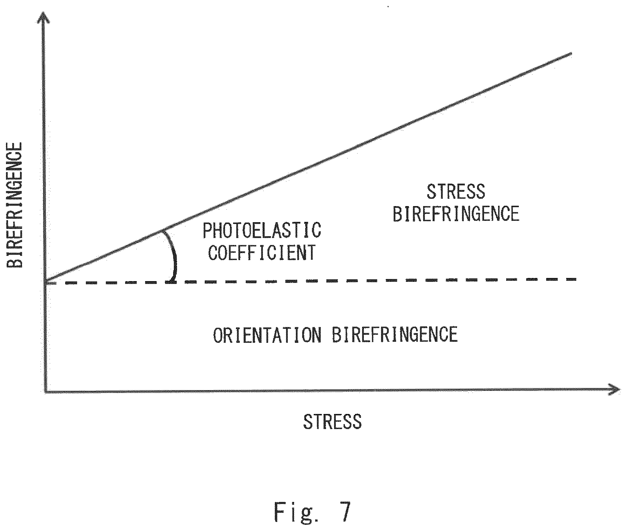

Fig. 7 shows an image diagram illustrating a relationship between stress and birefringence, and a relationship among orientation birefringence, stress birefringence, and photoelastic coefficient.

The polycarbonate resins used in Patent Literature 3 and 4 have a very large absolute value of the photoelastic coefficient of $90 \times 10^{-12}$/Pa, and thus the Re values change with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, color unevenness may be observed due to variation in the Re value. In particular, after thermoforming, residual stress generated in a cooling step of thermoforming tends to have a large variation in the Re value of the resin plate.

The methacrylic resin used in Patent Literature 1 has a small absolute value of the photoelastic coefficient of $3.2 \times 10^{-12}$/Pa, and thus the Re value does not easily change with stress. Therefore, in the case of using the methacrylic resin, it is possible to obtain an optically uniform liquid crystal display protective plate. However, since the methacrylic resin has a small absolute value of orientation birefringence of $4.0 \times 10^{-4}$, the Re value of the resulting liquid crystal display protective plate tends to be as small as 20 nm, although it depends on the thickness. Therefore, when the liquid crystal display protective plate on a liquid crystal screen is observed through a polarizing filter, blackout, in which the screen may become completely dark, may occur depending on an angle between the polarization axis of the emitted light and the transmission axis of the polarizing filter, resulting in deterioration of the visibility of images.

In the case where the Re value of the liquid crystal display protective plate is larger than the suitable range, the difference in light transmittance for each wavelength in the visible light range generally becomes large when viewed through a polarizing filter, and hence various colors may be seen, resulting in deterioration of the visibility (colored phenomenon).

The present invention has been devised in view of the circumstances described above, and an object thereof is to provide a liquid crystal display protective plate having an in-plane retardation value (Re value) within a suitable range both before and after thermoforming and a small variation in the in-plane retardation value (Re value), and capable of suppressing deterioration of visibility such as color unevenness, blackout, and coloring when the liquid crystal display protective plate on a liquid crystal screen is observed through a polarizing filter.

Solution to Problem

The present invention provides a liquid crystal display protective plate as defined in appended independent claim 1, a liquid crystal display protective plate with a curved surface as defined in appended independent claim 8, and a method for producing the same as defined in appended independent claim 13. Preferred embodiments thereof are defined in the appended dependent claims

Advantageous Effects of Invention

The present invention can provide a liquid crystal display protective plate having an in-plane retardation value (Re value) within a suitable range both before and after thermoforming and a small variation in the in-plane retardation value (Re value), and capable of suppressing deterioration of visibility such as color unevenness, blackout, and coloring when the liquid crystal display protective plate on a liquid crystal screen is observed through a polarizing filter.

Brief Description of the Drawings

[Fig. 1] Fig. 1 is a schematic cross-sectional view of the liquid crystal display protective plate of the first embodiment according to the present invention.
[Fig. 2] Fig. 2 is a schematic cross-sectional view of the liquid crystal display protective plate of the second embodiment according to the present invention.
[Fig. 3] Fig. 3 is a schematic view of the apparatus for production of the extruded plate of one embodiment according to the present invention.
[Fig. 4] Fig. 4 is a schematic cross-sectional view of the liquid crystal display protective plate for comparative examples.
[Fig. 5] Fig. 5 is a schematic perspective view of a resin mold used in [Examples].
[Fig. 6] Fig. 6 illustrates how to determine the forming percentage.
[Fig. 7] Fig. 7 is an image diagram illustrating a relationship between stress and birefringence, and a relationship among orientation birefringence, stress birefringence, and photoelastic coefficient.

Description of Embodiments

In general, the term "film", "sheet", or "plate" is used for a thin film formed product depending on its thickness, but there is no clear distinction. The term "resin plate" as used herein includes "resin film" and "resin sheet".
In the present description, the glass transition temperature of common materials is represented as "Tg".

[Liquid crystal display protective plate]

The present invention relates to a liquid crystal display protective plate. The liquid crystal display protective plate can be suitably used for the protection of liquid crystal displays and touch panel displays that combine such liquid crystal displays with touch panels.
The liquid crystal display protective plate of the present invention includes a flat resin plate in which a substrate layer is laminated on both sides of a phase difference adjusting layer. The flat resin plate is preferably an extruded plate.
The above liquid crystal display protective plate of the present invention can be thermoformed to produce a liquid crystal display protective plate with a curved surface.
The liquid crystal display protective plate with a curved surface of the present invention includes a resin plate having a curved surface in which a substrate layer is laminated on both sides of a phase difference adjusting layer and further includes a cured coating film, if necessary. The resin plate having a curved surface is a thermoformed plate made by thermoforming a flat resin plate.
The liquid crystal display protective plate and the liquid crystal display protective plate with a curved surface of the present invention can have a cured coating film on at least one of the outermost surfaces, if necessary.
**In** the liquid crystal display protective plate and the liquid crystal display protective plate with a curved surface of the present invention, the phase difference adjusting layer includes a transparent thermoplastic resin (A) having specific optical properties, and the substrate layer includes a transparent thermoplastic resin (B) having specific optical properties. $Tg_A > Tg_B$, in which $Tg_A$ (°C) represents a glass transition temperature of the phase difference adjusting layer, and $Tg_B$ (°C) represents a glass transition temperature of the substrate layer. $T_A < T_B$, in which $T_A$ represents a thickness of the phase difference adjusting layer, and $T_B$ represents a total thickness of the substrate layers.
The flat resin plate and the resin plate having a curved surface have an in-plane retardation value (also referred to as a "Re value") of 50 to 330 nm.
The standard deviation of the Re value of the flat resin plate within a width of 17 cm and a length of 22 cm is preferably 15.0 nm or less.
When the flat resin plate is heated to a temperature of $Tg_B$ or higher and $Tg_A$ or lower, the absolute value of a rate of change in the Re value after heating relative to the value before heating is preferably 50% or less.
When the flat resin plate is heated to a temperature of $Tg_B$ or higher and $Tg_A$ or lower, the standard deviation of the Re value within a width of 17 cm and a length of 22 cm is preferably 25.0 nm or less.
The standard deviation of the Re value of the resin plate having a curved surface within a width of 17 cm and a length of 22 cm is preferably 25.0 nm or less.

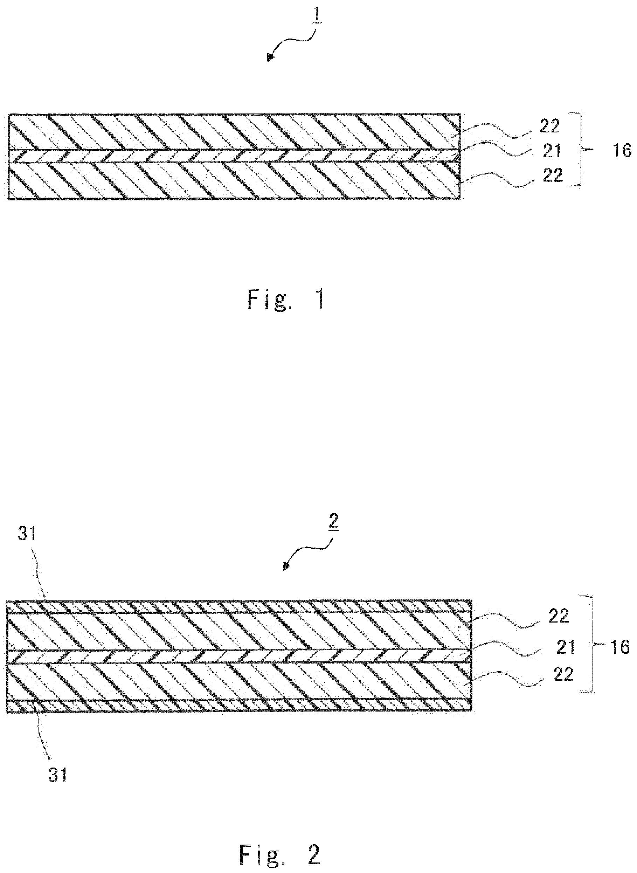

Fig. 1 and Fig. 2 are schematic cross-sectional views of the liquid crystal display protective plates of the first and the second embodiments according to the present invention. In the figures, reference numerals 1 and 2 each denote a liquid crystal display protective plate, reference numeral 16 denotes a flat resin plate, reference numeral 21 denotes a phase difference adjusting layer, reference numeral 22 denotes a substrate layer, and reference numeral 31 denotes a

cured coating film.

The liquid crystal display protective plate 1 of the first embodiment is composed of the flat resin plate 16 having a three-layer structure in which the substrate layer 22 is laminated on both sides of the phase difference adjusting layer 21.

The liquid crystal display protective plate 2 of the second embodiment includes a cured coating film 31 formed on at least one surface of the flat resin plate 16 having a three-layer structure in which the substrate layer 22 is laminated on both sides of the phase difference adjusting layer 21. In an example shown in Fig. 2, the cured coating film 31 is formed on both sides of the flat resin plate 16.

The configuration of the liquid crystal display protective plates is not limited to examples illustrated and can be appropriately designed and changed within a range not deviated from the gist of the present invention.

The flat liquid crystal display protective plates as shown in Figs. 1 and 2 can be thermoformed to produce liquid crystal display protective plates with curved surfaces.

In the flat resin plate and the resin plate having a curved surface, the phase difference adjusting layer includes a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen after the uniaxial stretching.

The "retardation" is the phase difference between light in the direction of the molecular backbone and light in the direction perpendicular to the direction of the molecular backbone. In general, polymers can have any shape by heating and melting, but it is known that retardation occurs due to stress generated in the process of heating and cooling, the orientation of molecules. Note that in the present description, the "retardation" refers to the in-plane retardation, unless otherwise noted.

In general, the Re value of the resin plate is expressed by the following formula (i).

$$[\text{Re value of the resin plate}] = [\text{birefringence } (\Delta N)] \times [\text{thickness } (d)] \qquad (i)$$

The birefringence ($\Delta N$) is expressed by the following formula (ii).

$$[\text{Birefringence}] = [\text{stress birefringence}] + [\text{orientation birefringence}] \qquad (ii)$$

The stress birefringence and the orientation birefringence are expressed by the following formulas (iii) and (iv), respectively.

$$[\text{Stress birefringence}] = [\text{photoelastic coefficient } (C)] \times [\text{stress}] \qquad (iii)$$

$$[\text{Orientation birefringence}] = [\text{intrinsic birefringence}] \times [\text{degree of orientation}] \qquad (iv)$$

In formula (iv), the degree of orientation is a value in the range of 0 to 1.0.

Fig. 7 shows an image diagram illustrating a relationship between stress and birefringence, and a relationship among orientation birefringence, stress birefringence, and photoelastic coefficient.

In the present invention, optical properties of the transparent thermoplastic resin (A) and the transparent thermoplastic resin (B) are specified with the photoelastic coefficient and the orientation birefringence, which are schematically illustrated in Fig. 7.

The liquid crystal display protective plate and the liquid crystal display protective plate with a curved surface of the present invention includes a phase difference adjusting layer including the transparent thermoplastic resin (A) having the above specific optical properties, thus making it possible to suppress the deterioration of visibility such as color unevenness and blackout when the liquid crystal display protective plate on a liquid crystal screen is observed through a polarizing filter.

In the present description, the "Re value of the resin plate" is an average Re value of about 110,000 birefringent pixels within a measurement range of 17 cm in width and 22 cm in length, unless otherwise noted. The "standard deviation of the Re value of the resin plate" is a standard deviation of the Re value of about 110,000 birefringent pixels within a measurement range of 17 cm in width and 22 cm in length, unless otherwise noted.

The average and standard deviation of the Re value can be measured, for example, by using the retardation measuring instrument "WPA-100-L", manufactured by Photonic Lattice, Inc., according to the method described in

[Examples] below.

The flat resin plate and the resin plate having a curved surface have a Re value of 50 to 330 nm, preferably 70 to 250 nm, more preferably 80 to 200 nm, particularly preferably 90 to 150 nm, and most preferably 100 to 140 nm.

If the Re value is less than the lower limit, blackout may occur when the liquid crystal display protective plate on a liquid crystal screen is observed through a polarizing filter, regardless of the relationship between the polarization axis of the emitted light and the transmission axis of the polarizing filter. If the Re value is more than the upper limit, the difference in light transmittance for each wavelength in the visible light range becomes large when viewed through a polarizing filter, and hence various colors may be seen, resulting in deterioration of the visibility (colored phenomenon).

The smaller the standard deviation of the Re value of the flat resin plate and the resin plate having a curved surface, the less variation in the Re value, which is preferred. If the standard deviation of the Re value is sufficiently small, color unevenness due to variation in the Re value may be suppressed when the liquid crystal display protective plate on a liquid crystal screen is observed through a polarizing filter, and hence the visibility improves.

The standard deviation of the Re value of the flat resin plate is preferably 15 nm or less, more preferably 10 nm or less, still more preferably 7 nm or less, particularly preferably 5 nm or less, and most preferably 4 nm or less.

The standard deviation of the Re value of the resin plate having a curved surface is preferably 25.0 nm or less, more preferably 20.0 nm or less, particularly preferably 15.0 nm or less, and most preferably 10.0 nm or less.

The Re value and the standard deviation of the Re value of the flat resin plate preferably do not change greatly due to thermoforming. In the present invention, the thermoforming temperature is preferably a temperature of $Tg_B$ or higher and $Tg_A$ or lower and more preferably a temperature of $Tg_B$ or higher and lower than $Tg_A$.

When the flat resin plate is heated to a temperature of $Tg_B$ or higher and $Tg_A$ or lower, the absolute value of a rate of change in the Re value after heating relative to the value before heating is preferably 50% or less, more preferably 45% or less, still more preferably 40% or less, particularly preferably 35% or less, and most preferably 30% or less.

The rate of change in the Re value after heating relative to before heating is expressed by the following formula.

[Rate of change in Re value after heating relative to before heating] (%) = ([Re value after heating] - [Re value before heating])/[Re value before heating] $\times$ 100

When the flat resin plate is heated to a temperature of $Tg_B$ or higher and $Tg_A$ or lower, the standard deviation of the Re value within a width of 17 cm and a length of 22 cm is preferably 25.0 nm or less, more preferably 20.0 nm or less, particularly preferably 15.0 nm or less, and most preferably 10.0 nm or less.

The overall thickness (d) of the flat resin plate and the resin plate having a curved surface is not particularly limited and is preferably 0.2 to 4.5 mm, more preferably 0.3 to 4.0 mm, and particularly preferably 0.4 to 3.0 mm. Excessively small overall thickness may result in insufficient rigidity of the liquid crystal display protective plate, whereas excessively large overall thickness may hinder the weight reduction of liquid crystal displays and touch panel displays including the same.

(Phase difference adjusting layer)

The flat resin plate and the resin plate having a curved surface include a phase difference adjusting layer. The phase difference adjusting layer is a layer that mainly determines the Re value of the liquid crystal display protective plate and includes a transparent thermoplastic resin (A) having specific optical properties.

<Transparent thermoplastic resin (A)>

The transparent thermoplastic resin (A) has an absolute value of photoelastic coefficient ($C_A$) of 10.0 $\times$ $10^{-12}$/Pa or less, preferably 8.0 $\times$ $10^{-12}$/Pa or less, more preferably 6.0 $\times$ $10^{-12}$/Pa or less, particularly preferably 5.0 $\times$ $10^{-12}$/Pa or less, and most preferably 4.0 $\times$ $10^{-12}$/Pa or less. If the absolute value of the photoelastic coefficient ($C_A$) is equal to or less than the upper limit, stress birefringence due to residual stress that occurs during the forming process such as extrusion is small (see Fig. 7), and thus the standard deviation of the Re value of the liquid crystal display protective plate can be reduced. As a result, color unevenness due to variation in the Re value may be suppressed when the liquid crystal display protective plate on a liquid crystal screen is observed through a polarizing filter, and hence the visibility improves.

The transparent thermoplastic resin (A) has an absolute value of orientation birefringence ($\Delta n_A$) of 10.0 $\times$ $10^{-4}$ to 100.0 $\times$ $10^{-4}$, preferably 20.0 $\times$ $10^{-4}$ to 90.0 $\times$ $10^{-4}$, more preferably 30.0 $\times$ $10^{-4}$ to 70.0 $\times$ $10^{-4}$, and particularly preferably 35.0 $\times$ $10^{-4}$ to 60.0 $\times$ $10^{-4}$. If the absolute value of orientation birefringence ($\Delta n_A$) of the transparent thermoplastic resin (A) is within the above range, the Re value of the liquid crystal display protective plate can be controlled within an appropriate range.

The orientation birefringence depends on the degree of polymer orientation and is therefore affected by production conditions such as forming conditions and stretching conditions. In the present description, the "orientation

birefringence" is measured according to the method described in [Examples] below, unless otherwise noted.

The transparent thermoplastic resin (A) is not particularly limited as long as it is a transparent thermoplastic resin that satisfies ranges of photoelastic coefficient ($C_A$) and orientation birefringence ($\Delta n_A$) specified in the present invention.

In one aspect, the transparent thermoplastic resin (A) can contain one or two or more aromatic vinyl monomer units. The aromatic vinyl monomers are not particularly limited. Examples thereof include styrene (St); nucleus alkyl-substituted styrene such as 2-methylstyrene, 3-methylstyrene, 4-methylstyrene, 4-ethylstyrene, and 4-tert-butylstyrene; and $\alpha$-alkyl-substituted styrene such as $\alpha$-methylstyrene and 4-methyl-$\alpha$-methylstyrene. Among them, styrene (St) is preferred from the viewpoint of availability.

V [mass%] represents a content of the aromatic vinyl monomer unit in the transparent thermoplastic resin (A), and $T_A$ [mm] represents a thickness of the phase difference adjusting layer. The product of them ($V \times T_A$) preferably satisfies the following formula (1).

$$6.0 \leq V \times T_A \leq 30.0 \qquad (1)$$

The transparent thermoplastic resin (A) has a small absolute value of photoelastic coefficient ($C_A$) and almost zero stress birefringence. In the case where the transparent thermoplastic resin (A) contains aromatic vinyl monomer units such as styrene (St) units, the orientation birefringence ($\Delta n_A$) tends to depend on the content of the aromatic vinyl monomer units V [ mass%] in the transparent thermoplastic resin (A). Therefore, $V \times T_A$ is strongly correlated with the Re value of the liquid crystal display protective plate. In the case where the $V \times T_A$ satisfies the above formula (1), the Re value of the liquid crystal display protective plate can be controlled within an appropriate range.

The transparent thermoplastic resin (A) may be a copolymer having, in addition to aromatic vinyl monomer units, methacrylic acid ester units such as methyl methacrylate (MMA) units; acid anhydride units such as maleic anhydride units; and other monomer units such as acrylonitrile units.

Specific examples of the transparent thermoplastic resin (A) containing the aromatic vinyl monomer units include a methacrylic acid ester-styrene copolymer (MS resin); a styrene-maleic anhydride copolymer (SMA resin); a styrene-methacrylic acid ester-maleic anhydride copolymer (SMM resin); $\alpha$-methylstyrene-maleic anhydride-methacrylic acid ester copolymer ($\alpha$StMM resin); an acrylonitrile-styrene copolymer (AS resin); and an acrylimide resin. These can be used alone or in combination of two or more.

Examples of commercially available products of the above resins include the following products:

MS resin: "Toyo MS" manufactured by TOYO STYRENE CO., LTD., etc.;
SMA resin: "Plexiglas FT15" manufactured by Daicel-Evonik Ltd., "XIBOND" and "XIRAN" manufactured by Polyscope Polymers BV, etc.;
SMM resin: "RESISFY" manufactured by Denka Company Limited, etc.;
AS resin: "LITAC-A" manufactured by NIPPON A&L INC., etc.; and
acrylimide resin: "Pleximid" manufactured by Daicel-Evonik Ltd., etc.

The transparent thermoplastic resin (A) may be a resin that does not contain the aromatic vinyl monomer units as long as it satisfies the ranges of photoelastic coefficient ($C_A$) and orientation birefringence ($\Delta n_A$) specified in the present invention. Examples of the transparent thermoplastic resin (A) that does not contain the aromatic vinyl monomer units include a modified methacrylic resin containing methacrylic acid ester units such as methyl methacrylate units and at least one unit selected from glutarimide units, N-substituted or unsubstituted maleimide units, and lactone ring units. These can be used alone or in combination of two or more.

The transparent thermoplastic resin (A) may be a mixture of a resin containing aromatic vinyl monomer units that satisfy ranges of photoelastic coefficient ($C_A$) and orientation birefringence ($\Delta n_A$) specified in the present invention and a resin (modified methacrylic resin) that does not contain aromatic vinyl monomer units that satisfy ranges of photoelastic coefficient ($C_A$) and orientation birefringence ($\Delta n_A$) specified in the present invention.

**In** the present invention, common methacrylic resins (non-modified methacrylic resins) and polycarbonate resins other than the above are not included in the transparent thermoplastic resin (A) because the photoelastic coefficient and/or orientation birefringence are outside the specified ranges of the present invention.

The polycarbonate resin has a very large absolute value of the photoelastic coefficient of $90 \times 10^{-12}$/Pa, and thus the Re value changes with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, color unevenness may be observed due to variation in the Re value.

**In** particular, the resin plate tends to change greatly in Re value after thermoforming relative to before thermoforming and have a large variation in the Re value. The thermoforming process, for example, includes heating

the resin plate, pressing a mold onto the heated resin plate, cooling the resin plate in the mold, and removing the cooled resin plate from the mold. In the cooling process, strains (residual stress) occur in the resin plate. A resin plate with a polycarbonate resin having a large absolute value of photoelastic coefficient tends to have a remarkable retardation unevenness due to residual stress generated in the cooling process of thermoforming and thus have a large variation in the Re value of the resin plate.

The methacrylic resin has a small absolute value of the photoelastic coefficient of $3.2 \times 10^{-12}$/Pa, and thus the Re value does not easily change with stress. Therefore, in the case of using the methacrylic resin, it is possible to obtain an optically uniform liquid crystal display protective plate. However, since the methacrylic resin has a small absolute value of orientation birefringence of $4.0 \times 10^{-4}$, the Re value of the resulting liquid crystal display protective plate tends to be as small as 20 nm, although it depends on the thickness. Therefore, when the liquid crystal display protective plate on a liquid crystal screen is observed through a polarizing filter, blackout, in which the screen may become completely dark, may occur depending on an angle between the polarization axis of the emitted light and the transmission axis of the polarizing filter, resulting in deterioration of the visibility of images.

The thickness of the phase difference adjusting layer ($T_A$) is not particularly limited and is preferably 0.05 to 3.0 mm, more preferably 0.05 to 0.5 mm, particularly preferably 0.1 to 0.3 mm, and most preferably 0.1 to 0.2 mm.

The phase difference adjusting layer can contain one or more other polymers whose photoelastic coefficient and/or orientation birefringence are not specified as the transparent thermoplastic resin (A), if in small amounts. The types of such other polymers are not particularly limited. Examples thereof include other thermoplastic resins such as common non-modified methacrylic resins, polycarbonate resins, polyolefins, e.g., polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins.

The common non-modified methacrylic resins are, for example, resins composed of one or more methacrylic acid ester units.

The content of the transparent thermoplastic resin (A) in the phase difference adjusting layer is preferably larger and is preferably 90 mass% or more, more preferably 95 mass% or more, and particularly preferably 98 mass% or more. The content of the other polymers in the phase difference adjusting layer is preferably 10 mass% or less, more preferably 5 mass% or less, and particularly preferably 2 mass% or less.

The phase difference adjusting layer can contain various additives, if necessary. Examples of the additives include colorants, antioxidants, thermal degradation preventing agents, ultraviolet absorbers, light stabilizers, lubricants, mold release agents, polymer processing aids, antistatic agents, flame retardants, light diffusing agents, matting agents, rubber components (impact resistant modifiers) such as core-shell particles and block copolymers, and phosphors. The content of the additives can be appropriately set, as long as the effects of the present invention are not impaired. For example, the content of antioxidants is preferably 0.01 to 1 parts by mass, the content of ultraviolet absorbers is preferably 0.01 to 3 parts by mass, the content of light stabilizers is preferably 0.01 to 3 parts by mass, and the content of lubricants is preferably 0.01 to 3 parts by mass, with respect to 100 parts by mass of the constituent resin of the phase difference adjusting layer.

In the case of adding such other polymers and/or additives to the phase difference adjusting layer, the timing of addition may be at the time of polymerization of the transparent thermoplastic resin (A) or after the polymerization.

The phase difference adjusting layer may be a resin layer formed of a resin composition containing the transparent thermoplastic resin (A) and a known rubber component (impact resistance modifier). Examples of the rubber component include a multilayered polymer particle having a core-shell structure, a rubber-like polymer with a salami structure, and a block polymer. The rubber component can contain diene monomer units and alkyl acrylate monomer units. From the viewpoint of transparency of the phase difference adjusting layer, a smaller difference between and refractive index of the rubber component and a reflective index of the main component, the transparent thermoplastic resin (A) is preferred.

The glass transition temperature of the phase difference adjusting layer ($Tg_A$) is not particularly limited as long as it satisfies $Tg_A > Tg_B$ and is preferably 90 to 170°C, more preferably 100 to 160°C, particularly preferably 110 to 155°C, and most preferably 130 to 155°C.

Note that the "glass transition temperature of the phase difference adjusting layer ($Tg_A$)" is a glass transition temperature of all constituent materials of the phase difference adjusting layer, which is composed of one or more transparent thermoplastic resin (A) and, if necessary, one or more optional components.

The difference between $Tg_A$ and $Tg_B$ ($Tg_A - Tg_B$) is preferably 5 to 70°C, more preferably 10 to 50°C, particularly preferably 15 to 45°C, and most preferably 20 to 40°C. If $Tg_A - Tg_B$ is within the above range, as described in detail below, the resin plate can be thermoformed well while suppressing changes in the Re value of the resin plate. Furthermore, deformation of the obtained liquid crystal display protective plate with a curved surface can be suppressed.

In the present invention, thermoforming can be preferably performed at a temperature of $Tg_B$ or higher and $Tg_A$ or lower.

It is more preferable to perform thermoforming at a temperature of $Tg_B$ + 10°C to $Tg_B$ + 30°C. Within this

temperature range, the resin plate can be thermoformed well into the desired shape, and the residual stress generated in the cooling process of thermoforming can be minimized. In this case, the change in Re value can be suppressed, and deformation of the obtained liquid crystal display protective plate with a curved surface can be suppressed. For example, in the case where reliability tests for in-vehicle displays (e.g., for 1,000 hours at 105°C or for 72 hours at 85°C and 85% RH) are conducted on a liquid crystal display protective plate with a curved surface, deformation due to the release of residual stress is suppressed, which is preferred.

It is particularly preferable to perform thermoforming at a temperature within the range of $Tg_B$ + 10°C to $Tg_B$ + 30°C and lower than $Tg_A$. If the temperature is lower than $Tg_A$, the stress and orientation of the phase difference adjusting layer are not released, thus effectively suppressing the change in Re value and deformation of the liquid crystal display protective plate with a curved surface, which is preferred.

When thermoforming at a temperature of lower than $Tg_B$ + 10°C, it is difficult to thermoform the resin plate into the desired shape. Even in this temperature range, the resin plate can be thermoformed into the desired shape by applying a large load or by extending the forming time, but large forming stresses are generated in the resin plate. In the case where reliability tests for in-vehicle displays are conducted on the liquid crystal display protective plate with a curved surface obtained under this condition, large residual stresses are released and may cause significant deformation.

(Substrate layer)

The flat resin plate and the resin plate having a curved surface includes a substrate layer that is laminated on both sides of the phase difference adjusting layer above and has a lower glass transition temperature (Tg) than the phase difference adjusting layer. The substrate layer increases the overall thickness (d) of the resin plate, improving the rigidity of the resin plate.

The above laminated structure provides the following effects.

In the case of thermoforming a flat resin plate with a phase difference adjusting layer on the surface at a temperature of $Tg_B$ or higher and $Tg_A$ or lower, cracks may occur in the phase difference adjusting layer. Especially, in the case where the phase difference adjusting layer contains brittle resins such as SMA and SMM resins, cracks are likely to occur in the phase difference adjusting layer during thermoforming at the above temperatures.

In a flat resin plate in which a substrate layer is formed on both sides of a phase difference adjusting layer, cracks in the phase difference adjusting layer can be effectively suppressed when thermoforming at a temperature of $Tg_B$ or higher and $Tg_A$ or lower, even in the case where the phase difference adjusting layer contains brittle resins such as SMA and SMM resins.

In the heating process of thermoforming, the surface temperature rises first, followed by the internal temperature. In a laminated structure where the substrate layer is formed on both sides of the phase difference adjusting layer, the temperature of the internal phase difference adjusting layer is less likely to rise than that of the substrate layer on the surface. Therefore, the change in Re value after thermoforming relative to before thermoforming can be suppressed more effectively than heating a flat resin plate in which the phase difference adjusting layer is on the surface.

The substrate layer is preferably a resin layer that does not affect the Re value of the liquid crystal display protective plate and is preferably a resin layer that contains a transparent thermoplastic resin (B) with a sufficiently small photoelastic coefficient and orientation birefringence. The composition and thickness of the substrate layer laminated on both sides of the phase difference adjusting layer may be the same or non-identical, as long as each substrate layer is a resin layer containing the transparent thermoplastic resin (B) having the optical properties above.

<Transparent thermoplastic resin (B)>

The absolute value of the photoelastic coefficient ($C_B$) of the transparent thermoplastic resin (B) is preferably smaller and is preferably $10.0 \times 10^{-12}$/Pa or less, more preferably $8.0 \times 10^{-12}$/Pa or less, still more preferably $6.0 \times 10^{-12}$/Pa or less, particularly preferably $5.0 \times 10^{-12}$/Pa or less, and most preferably $4.0 \times 10^{-12}$/Pa or less. If the absolute value of photoelastic coefficient ($C_B$) is equal to or less than the upper limit, stress birefringence due to residual stress that occurs during the forming process such as extrusion is sufficiently small (see Fig. 7), and thus the standard deviation of the Re value of the resin plate can be reduced. As a result, color unevenness due to variation in the Re value may be suppressed when the liquid crystal display protective plate on a liquid crystal screen is observed through a polarizing filter, and hence the visibility improves.

The orientation birefringence ($\Delta n_B$) of the transparent thermoplastic resin (B) is preferably smaller and is preferably less than $10.0 \times 10^{-4}$, more preferably $8.0 \times 10^{-4}$ or less, still more preferably $6.0 \times 10^{-4}$ or less, particularly preferably $4.0 \times 10^{-4}$ or less, and most preferably $2.0 \times 10^{-4}$ or less. If the absolute value of orientation birefringence ($\Delta n_B$) of the transparent thermoplastic resin (B) is equal to or less than the upper limit, the effect on the Re value of the resin plate is sufficiently small (see Fig. 7), and thus the Re value of the resin plate can be well controlled within an appropriate range.

The transparent thermoplastic resin (B) is not particularly limited as long as it is a transparent thermoplastic resin

that satisfies ranges of the photoelastic coefficient ($C_B$) and the orientation birefringence ($\Delta n_B$) specified in the present invention. Specific examples thereof include a common non-modified methacrylic resin (PM), a modified methacrylic resin that is modified with glutarimide units, N-substituted or unsubstituted maleimide units, lactone ring units, or the like, and a cycloolefin polymer (COP). The transparent thermoplastic resin (B) can be used alone or in combination of two or more.

The methacrylic resin (PM) is a homopolymer or a copolymer containing structural units derived from one or more methacrylic acid esters. From the viewpoint of transparency, the content of the methacrylic acid ester monomer units in the methacrylic resin (PM) is preferably 50 mass% or more, more preferably 80 mass% or more, and particularly preferably 90 mass% or more, and may also be 100 mass%.

Preferred examples of the methacrylic acid esters include methyl methacrylate (MMA), ethyl methacrylate, butyl methacrylate, phenyl methacrylate, benzyl methacrylate, 2-ethylhexyl methacrylate, 2-hydroxyethyl methacrylate; methacrylic esters of a monocyclic aliphatic hydrocarbon; and methacrylic esters of a polycyclic aliphatic hydrocarbon. From the viewpoint of transparency, the methacrylic resin (PM) preferably contains the MMA units, and the content of the MMA units in the methacrylic resin (PM) is preferably 50 mass% or more, more preferably 80 mass% or more, and particularly preferably 90 mass% or more, and may also be 100 mass%.

The methacrylic resin (PM) may contain structural units derived from one or more monomers other than the methacrylic acid esters. Examples of other monomers include acrylic acid esters such as methyl acrylate (MA), ethyl acrylate, butyl acrylate, cyclohexyl acrylate, phenyl acrylate, benzyl acrylate, 2-ethylhexyl acrylate, and 2-hydroxyethyl acrylate; styrenes; acrylonitriles and methacrylonitriles; and maleic anhydride, phenylmaleimide, and cyclohexylmaleimide. Among them, the MA is preferred from the viewpoint of transparency. For example, a copolymer of MMA and MA has excellent transparency and thus is preferred. The content of the MMA in this copolymers is preferably 80 mass% or more, more preferably 85 mass% or more, and particularly preferably 90 mass% or more, and may also be 100 mass%.

The methacrylic resin (PM) is preferably obtained by polymerizing one or more methacrylic acid esters including MMA and, if necessary, other monomers. In the case of using a plurality of monomers, polymerization is usually carried out after mixing the plurality of monomers to prepare a monomer mixture. The polymerization method is not particularly limited and is preferably a radical polymerization method such as a bulk polymerization method, a suspension polymerization method, a solution polymerization method, and an emulsion polymerization method from the viewpoint of productivity.

The types of resins illustrated as the transparent thermoplastic resin (A) (specifically, MS resin, SMA resin, SMM resin, AS resin, and modified methacrylic resin, etc.) may be used as the transparent thermoplastic resin (B), as long as they satisfy the ranges of photoelastic coefficient ($C_B$) and orientation birefringence ($\Delta n_B$) specified in the present invention. The types of resins illustrated as the transparent thermoplastic resin (A) may be used as the transparent thermoplastic resin (B) depending on their monomer compositions or modification ratios.

The polycarbonate resins are not included in the transparent thermoplastic resin (B) because the photoelastic coefficient and orientation birefringence are outside the specified ranges of the present invention.

The polycarbonate resin has a very large absolute value of the photoelastic coefficient of $90 \times 10^{-12}$/Pa, and thus the Re value changes with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, color unevenness may be observed due to variation in the Re value. In particular, the resin plate tends to change greatly in Re value after thermoforming relative to before thermoforming and have a large variation in the Re value.

As described above, $Tg_A > Tg_B$, in which $Tg_A$ (°C) represents a glass transition temperature of the phase difference adjusting layer, and $Tg_B$ (°C) represents a glass transition temperature of the substrate layer.

The glass transition temperature of the substrate layer ($Tg_B$) is not particularly limited as long as it satisfies $Tg_A > Tg_B$. It is preferably 80 to 160°C, more preferably 100 to 150°C, particularly preferably 110 to 140°C, and most preferably 110 to 130°C.

Note that the "glass transition temperature of the substrate layer ($Tg_B$)" is a glass transition temperature of all constituent materials of the substrate layer, which is composed of one or more transparent thermoplastic resin (B) and, if necessary, one or more optional components.

$T_B$ represents the total thickness of the substrate layer laminated on both sides of the phase difference adjusting layer. In the liquid crystal display protective plate of the present invention, the total thickness of the substrate layers ($T_B$) is designed to be larger than the thickness of the phase difference adjusting layer ($T_A$). In other words, the liquid crystal display protective plate of the present invention satisfies $T_A < T_B$. The total thickness of the substrate layers ($T_B$) is not particularly limited as long as it satisfies $T_A < T_B$ and is appropriately designed according to the desired thickness and rigidity of the liquid crystal display protective plate. The $T_B$ is preferably 0.05 to 4.0 mm, more preferably 0.5 to 3.0 mm, particularly preferably 1.0 to 3.0 mm, and most preferably 1.5 to 2.5 mm.

In the present invention, $T_B/T_A > 1$, $T_B/T_A \geq 1.2$ is preferred, $T_B/T_A \geq 1.5$ is more preferred, $T_B/T_A \geq 2.0$ is still more preferred, $T_B/T_A \geq 5.0$ is particularly preferred, and $T_B/T_A \geq 7.0$ is most preferred.

If the $T_A$ and the $T_B$ are in the above relationship, the proportion of the total thickness of the substrate layers ($T_B$) to the overall thickness (d) of the resin plate **is sufficiently** large, and forming can be performed at a temperature suitable for

the substrate layer during thermoforming such as curved-surface forming, which is preferred.

In the case where the thickness of the phase difference adjusting layer ($T_A$) is larger than the total thickness of the substrate layers ($T_B$), it is difficult to achieve the desired forming percentage (molding percentage) by thermoforming at a temperature in the vicinity of the glass transition temperature ($Tg_B$) of the substrate layer. In this case, it is necessary to thermoform at a temperature higher than the glass transition temperature of the phase difference adjusting layer ($Tg_A$). Under this temperature condition, the degree of orientation of the phase difference adjusting layer decreases, resulting in a lower Re value, and thus blackout may occur when the liquid crystal display protective plate on a liquid crystal screen is observed through a polarizing filter. If $T_A < T_B$, the forming can be performed at a temperature suitable for the substrate layer during thermoforming, which is preferred.

The substrate layer can contain one or more other polymers whose photoelastic coefficient and/or orientation birefringence are not specified as the transparent thermoplastic resin (B), if in small amounts. The types of such other polymers are not particularly limited. Examples thereof include other thermoplastic resins such as polycarbonate resins, polyolefins, e.g., polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins.

The content of the transparent thermoplastic resin (B) in the substrate layer is preferably larger and is preferably 90 mass% or more, more preferably 95 mass% or more, and particularly preferably 98 mass% or more. The content of the other polymers in the substrate layer is preferably 10 mass% or less, more preferably 5 mass% or less, and particularly preferably 2 mass% or less.

The substrate layer can contain various additives, if necessary. An example of an additive type illustrated and preferred amounts to be added are the same as an additive available for the phase difference adjusting layer.

In the case of adding such other polymers and/or additives to the substrate layer, the timing of addition may be at the time of polymerization of the transparent thermoplastic resin (B) or after the polymerization.

The substrate layer may be a resin layer formed of a resin composition containing the transparent thermoplastic resin (B) and a known rubber component (impact resistance modifier). An example of a rubber component illustrated is the same as a rubber component available for the phase difference adjusting layer. From the viewpoint of transparency of the substrate layer, a smaller difference between refractive index of the rubber component and a reflective index of the main component, the transparent thermoplastic resin (B) is preferred.

(Other resin layers)

The flat resin plate and the resin plate having a curved surface may have a resin layer other than the phase difference adjusting layer and the substrate layer. Examples of a laminated structure of the resin plate include a three-layer structure consisting of a substrate layer-phase difference adjusting layer -substrate layer; a four-layer structure consisting of a substrate layer-phase difference adjusting layer-substrate layer-other resin layer; and a four-layer structure consisting of a substrate layer-phase difference adjusting layer-other resin layer-substrate layer.

(Cured coating film)

The liquid crystal display protective plate and the liquid crystal display protective plate with a curved surface of the present invention can have a cured coating film on at least one of the outermost surfaces, if necessary.

In the case where a liquid crystal display protective plate with a curved surface has a cured coating film on at least one of the outermost surfaces, the timing of forming the cured coating film may be before or after the curved-surface processing. The curved-surface processing may be performed after forming the cured coating film on at least one surface of the flat liquid crystal display protective plate, or the flat liquid crystal display protective plate may be curved and then the cured coating film may be formed on at least one surface of the obtained liquid crystal display protective plate with a curved surface.

The cured coating film can serve as a scratch-resistant layer (hard coat layer) or a low reflective layer for the effect of improving visibility. The cured coating film can be formed by a known method.

Examples of the material of the cured coating film include inorganic-based, organic-based, organic-inorganic-based, and silicone-based materials, and organic-based and organic-inorganic-based materials are preferred from the viewpoint of productivity.

The inorganic-based cured coating film can be formed by, for example, forming a film of an inorganic material such as metal oxides such as $SiO_2$, $Al_2O_3$, $TiO_2$, and $ZrO_2$ by vapor-phase film formation such as vacuum vapor deposition and sputtering.

The organic-based cured coating film can be formed by, for example, coating with a paint containing a resin such as melamine-based resin, alkyd-based resin, urethane-based resin, and acrylic resin followed by heat curing, or by coating with a paint containing a polyfunctional acrylic resin and followed by ultraviolet curing.

The organic-inorganic-based cured coating film can be formed by, for example, coating with an ultraviolet curable hard coat paint containing inorganic ultrafine particles such as silica ultrafine particles in which a photopolymerization reactive functional group has been introduced into the surface and a curable organic component, and then subjecting the curable organic component and the photopolymerization reactive functional group of the inorganic ultrafine particles to polymerization reaction through ultraviolet irradiation. In this method, a mesh-shaped crosslinked coating film in which the inorganic ultrafine particles are dispersed in an organic matrix while being chemically bonded to the organic matrix can be obtained.

The silicone-based cured coating film can be formed by, for example, subjecting a partial hydrolysis product such as carbon functional alkoxysilane, alkyltrialkoxysilane, and tetraalkoxysilane, or a material obtained by blending colloidal silica with the partial hydrolysis product to polycondensation.

In the above method, examples of the material coating method include dip coating, various roll coatings such as gravure roll coating, flow coating, rod coating, blade coating, spray coating, die coating, and bar coating.

The thickness of the scratch-resistant (hard coating) cured coating film (scratch-resistant layer and hard coat layer) is preferably 2 to 30 μm and more preferably 5 to 20 μm. Excessively small thickness may result in insufficient surface hardness, whereas excessively large thickness may result in cracks caused by bending during the production process. The thickness of the low-reflective cured coating film (low reflective layer) is preferably 80 to 200 nm and more preferably 100 to 150 nm. Either excessively small or large thickness may result in insufficient low-reflection performance.

In addition to that, the liquid crystal display protective plate and the liquid crystal display protective plate with a curved surface of the present invention can have, if necessary, a known surface treatment layer such as an anti-glare layer, an anti-reflection layer, and an anti-finger print layer, on the surface.

[Method for producing liquid crystal display protective plate]

The method for producing the flat liquid crystal display protective plate of the present invention has a step (1) of forming a flat extruded resin plate in which a substrate layer having a relatively low glass transition temperature (Tg) is laminated on both sides of a phase difference adjusting layer.

The method for producing the flat liquid crystal display protective plate with a cured coating film has the step (1) and a step (2) of forming a cured coating film on at least one surface of the obtained extruded resin plate.

(Step (1))

A flat liquid crystal display protective plate is preferably formed using co-extrusion.

Hereinafter, the method for producing the flat extruded resin plate by co-extrusion will be explained.

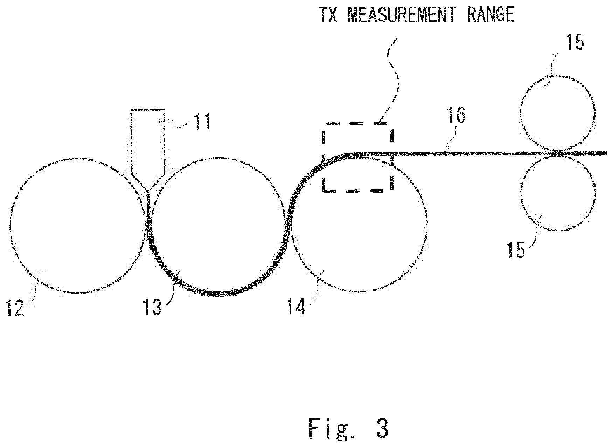

Fig. 3 shows a schematic view of an extrusion apparatus including a T die 11, first to third cooling rolls 12 to 14, and a pair of winding rolls 15, as one embodiment.

Constituent resins in each layer are each melted and kneaded using an extruder and co-extruded in the form of plates from the T die 11 with a wide discharge port in the form of the desired laminated structure.

Examples of the lamination method include the feed block method in which lamination is carried out before flowing into the T die and the multi-manifold method in which lamination is carried out inside the T die. From the viewpoint of enhancing the smoothness at the interface between the layers, the multi-manifold method is preferred.

The thermoplastic resin laminate in a molten state co-extruded from the T die 11 is pressurized and cooled using the first to third cooling rolls 12 to 14. The flat extruded resin plate 16 obtained after pressurization and cooling is wound by a pair of winding rolls 15. The number of cooling rolls can be appropriately designed.

Note that the configuration of the apparatus for production can be appropriately designed and changed in a range not deviated from the gist of the present invention.

In step (1), temperature of the entire resin on the third cooling roll 14 is TX. Fig. 3 schematically shows the TX measurement range in [Examples].

The temperature of the resin on the production line can be measured by a known method. For example, the surface temperature of the resin on the third cooling roll 14 can be measured as TX using a noncontact thermometer such as an infrared radiation thermometer.

In the present invention, the flat extruded resin plate is formed so as to have a Re value of 50 to 330 nm.

Preferably, the flat extruded resin plate is formed so that the standard deviation of the Re value within a width of 17 cm and a length of 22 cm is 25.0 nm or less.

To control the Re value, it is necessary to control orientation of molecules. The orientation of molecules is caused, for example, by stress during forming in the vicinity of the glass transition temperature of the polymer. The orientation of molecules can be controlled by optimizing the production condition during the extrusion process, whereby the Re value of the liquid crystal display protective plate after extrusion can be optimized.

(Step (2))

In step (2), an inorganic or organic cured coating film is formed on at least one surface of the flat liquid crystal display protective plate obtained in step (1) or a liquid crystal display protective plate thermoformed in step (3) described below using a known method. The method for forming the cured coating film has been described above and thus is omitted here.

(Other steps)

The method for producing the flat liquid crystal display protective plate and the flat liquid crystal display protective plate with a cured coating film can have steps other than steps above, if necessary.
For the purpose of improving the adhesion of the cured coating film to the flat liquid crystal display protective plate, for example, steps of applying surface treatments to the side on which the cured coating film of the flat liquid crystal display protective plate obtained in step (1) is formed may be added between step (1) and step (2), in which the surface treatments include primer treatment; treatments to make the surface concave and convex such as sandblasting treatment and solvent treatment; and surface oxidation treatments such as corona discharge treatment, chromic acid treatment, ozone irradiation treatment, and ultraviolet irradiation treatment.

[Method for producing liquid crystal display protective plate with curved surface]

The method for producing the liquid crystal display protective plate with a curved surface of the present invention has

a step (1) of forming a flat liquid crystal display protective plate in which a substrate layer having a relatively low glass transition temperature (Tg) is laminated on both sides of a phase difference adjusting layer, and
a step (3) of thermoforming the flat liquid crystal display protective plate into a shape having a curved surface by heating it to a temperature of $Tg_B$ or higher and $Tg_A$ or lower (TY).

The method for producing the liquid crystal display protective plate with a curved surface of the present invention can have a step (2) of forming a cured coating film on at least one surface of the flat liquid crystal display protective plate, if necessary, between step (1) and step (3). In this case, step (3) involves thermoforming a flat liquid crystal display protective plate with a cured coating film.
Steps (1) and (2) have been described in [Method for producing liquid crystal display protective plate] and thus are omitted here.

(Step (3))

Shaping processes such as a curved-surface processing for the flat liquid crystal display protective plate or flat liquid crystal display protective plate with a cured coating film can be performed by known thermoforming such as press forming, vacuum forming, and pressure forming.
In the present invention, a fat liquid crystal display protective plate in which a substrate layer is formed on both sides of a phase difference adjusting layer is preferably thermoformed at a temperature of higher than $Tg_B$ and lower than $Tg_A$ and lower than TX.
In step (3), the thermoforming temperature is TY. TX > TY, and $Tg_B < TY < Tg_A$ is preferred.
In the present invention, it is preferable to perform thermoforming at a temperature of $Tg_B$ or higher and $Tg_A$ or lower (TY), more preferable to thermoform at a temperature of higher than $Tg_B$ and lower than $Tg_A$, and particularly preferable to thermoform at a temperature of $Tg_B$ + 10°C to $Tg_B$ + 30°C.
Within the above temperature range, the flat liquid crystal display protective plate can be thermoformed well into the desired shape, and the residual stress generated in the cooling process of thermoforming can be minimized. In this case, the change in Re value can be suppressed, and deformation of the liquid crystal display protective plate with a curved surface obtained after thermoforming can be suppressed. For example, in the case where reliability tests for in-vehicle displays (e.g., for 1,000 hours at 105°C or for 72 hours at 85°C and 85% RH) are conducted on a liquid crystal display protective plate with a curved surface, deformation due to the release of residual stress is suppressed, which is preferred.
It is most preferable to perform thermoforming at a temperature within the range of $Tg_B$ + 10°C to $Tg_B$ + 30°C and lower than $Tg_A$. If the temperature is lower than $Tg_A$, the stress and orientation of the phase difference adjusting layer are not released, thus effectively suppressing the change in Re value and deformation of the liquid crystal display protective plate with a curved surface, which is preferred.
When thermoforming at a temperature of lower than $Tg_B$ + 10°C, it is difficult to thermoform the extruded resin

plate into the desired shape. Even in this temperature range, the resin plate can be thermoformed into the desired shape by applying a large load or by extending the forming time, but large forming stresses are generated in the resin plate. In the case where reliability tests for in-vehicle displays are conducted on the liquid crystal display protective plate with a curved surface obtained under this condition, large residual stresses are released and may cause significant deformation.

In general, if thermoforming is performed at a temperature lower than $Tg_A$ of the constituent resin of the phase difference adjusting layer of the extruded resin plate, it is expected that a decrease in Re value can be suppressed. However, when the inventors have studied various thermoforming conditions, they have found that even in the case of thermoforming at a temperature lower than $Tg_A$ of the constituent resin of the phase difference adjusting layer of the extruded resin plate, if the thermoforming temperature is higher than the temperature to control the orientation of the extruded resin plate in the extrusion process, the orientation of the resin may relax and the Re value may decrease significantly. It was then found that when a liquid crystal display protective plate with a curved surface, which is thermoformed at a temperature lower than $Tg_A$ of the constituent resin of the phase difference adjusting layer and higher than the temperature to control the orientation of the extruded resin plate in the extrusion process, is observed through a polarizing filter, blackout, in which the screen becomes completely dark, may occur depending on an angle between the polarization axis of the emitted light and the transmission axis of the polarizing filter, resulting in deterioration of visibility of images.

The inventors have found through their studies that the orientation of the phase difference adjusting layer, which contributes to the magnitude of the Re value, is formed by the third cooling roll, for example, in the case where a resin plate with an overall thickness of 3 mm is extruded under conditions of a second cooling roll speed of 0.75 m/min. In other words, TX in the present invention is synonymous with the "temperature at which the orientation of the phase adjusting layer, which contributes to the magnitude of the Re value during cooling in the extrusion process, is fixed". Therefore, the temperature of the entire resin on the third cooling roll (TX) can be used as the lower limit of the "temperature to control the orientation of the extruded resin plate in the extrusion process". In the case of thermoforming at lower than TX, the resin temperature in the thermoforming process never reaches a resin temperature on the third cooling roll and a resin temperature upstream from the third cooling roll. Under this condition, the relaxation of the orientation of the resin is suppressed in the thermoforming process, effectively suppressing the decrease in Re value and effectively suppressing the deterioration of visibility when the liquid crystal display protective plate on a liquid crystal screen is observed through a polarizing filter. Note that in the case of co-extrusion at a second cooling roll speed of more than 0.75 m/min, the orientation of the phase difference adjusting layer may be formed between the third cooling roll and the winding roll. In the case where the overall thickness of the extruded resin plate to be formed is thicker than 3 mm, the orientation of the phase difference adjusting layer may be formed between the third cooling roll and the winding roll.

In the present invention, it is preferable that a fat liquid crystal display protective plate in which a substrate layer is formed on both sides of a phase difference adjusting layer is thermoformed at a temperature of higher than $Tg_B$ and lower than $Tg_A$ and lower than TX. In this case, cracks in the phase difference adjusting layer can be effectively suppressed even when the phase difference adjusting layer contains brittle resins such as SMA and SMM resins.

In the heating process of thermoforming, the surface temperature rises first, followed by the internal temperature. In a laminated structure where the substrate layer is formed on both sides of the phase difference adjusting layer, the temperature of the internal phase difference adjusting layer is less likely to rise than that of the substrate layer on the surface. Therefore, the change in Re value after thermoforming relative to before thermoforming can be suppressed more effectively than heating a flat liquid crystal display protective plate in which the phase difference adjusting layer is on the surface.

In the present invention, the flat extruded resin plate is formed so as to have a Re value of 50 to 330 nm in step (1). In step (1), the flat liquid crystal display protective plate is preferably formed so that the standard deviation of the Re value within a width of 17 cm and a length of 22 cm is 25.0 nm or less.

The absolute value of a rate of change in the Re value after thermoforming relative to the value before thermoforming is 50% or less, preferably 40% or less, more preferably 30% or less, particularly preferably 25% or less, and most preferably 20% or less.

The rate of change in the Re value after thermoforming relative to before thermoforming is expressed by the following formula.

[Rate of change in Re value after thermoforming relative to before thermoforming] (%) = 100 × ([Re value after thermoforming] - [Re value before thermoforming])/[Re value before thermoforming]

For the liquid crystal display protective plate with a curved surface of the present invention obtained after thermoforming, the standard deviation of the Re value within a width of 17 cm and a length of 22 cm is preferably 25.0 nm or less, more preferably 20.0 nm or less, particularly preferably 15.0 nm or less, and most preferably 10.0 nm or less.

The lower limit of curvature radius included in the liquid crystal display protective plate with a curved surface of the

invention obtained after thermoforming is 50 mm, preferably 75 mm, more preferably 100 mm, particularly preferably 200 mm, and most preferably 300 mm. The upper limit is 1,000 mm, preferably 800 mm, more preferably 600 mm, particularly preferably 500 mm, and most preferably 400 mm.

In the present invention, changes in the Re value of the resin plate are suppressed even after thermoforming is carried out, so it is possible to stably produce a liquid crystal display protective plate with a curved surface whose Re value is within a suitable range and has a small variation in the Re value.

As explained above, the present invention can provide a liquid crystal display protective plate having a Re value within a suitable range both before and after thermoforming and a small variation in the Re value, and capable of suppressing deterioration of visibility such as color unevenness, blackout, and coloring when the liquid crystal display protective plate on a liquid crystal screen is observed through a polarizing filter.

[Applications]

The liquid crystal display protective plate and the liquid crystal display protective plate with a curved surface of the present invention are suitable as protective plates for liquid crystal displays and touch panels used in, for example, ATMs of financial institutions such as banks; vending machines; televisions; and digital information devices such as mobile phones (including smartphones), personal computers, personal digital assistants (PDA) such as tablet-type personal computers, digital audio players, portable game machines, copiers, fax machines, and car navigation systems.

The liquid crystal display protective plate and the liquid crystal display protective plate with a curved surface of the present invention are suitable, for example, as a protective plate for in-vehicle liquid crystal displays.

Examples

Examples according to the present invention and Comparative Examples will be described.

[Evaluation items and evaluation methods]

The evaluation items and the evaluation methods are as follows.

(Glass transition temperature (Tg) of transparent thermoplastic resin)

The glass transition temperature (Tg) of the transparent thermoplastic resin was measured by using a differential scanning calorimeter ("DSC-50" manufactured by Rigaku Corporation). 10 mg of the transparent thermoplastic resin was put into an aluminum pan and set in the above apparatus. After nitrogen substitution was carried out for 30 minutes or more, the temperature was temporarily raised from 25°C to 200°C at a rate of 20°C/min, retained for 10 minutes, and then cooled to 25°C under a 10 ml/min nitrogen flow (primary scanning). Then, the temperature was raised to 200°C at a rate of 10°C/min (secondary scanning), and the glass transition temperature (Tg) was calculated from the results obtained in the secondary scanning by a middle point method. When a plurality of Tg data were obtained in the resin composition containing two or more resins, the value derived from the resin as the main component was adopted as the Tg data.

(Photoelastic coefficient of transparent thermoplastic resin)

The transparent thermoplastic resin was press-molded to obtain a resin plate with a thickness of 1.0 mm. A test specimen with a width of 15 mm and a length of 80 mm was cut out from the center of the obtained resin plate. Both ends of this test specimen in the longitudinal direction were gripped with a pair of chucks. The distance between the chucks was 70 mm.

"X-axis dovetail stage" manufactured by Oji Scientific Instruments Co., Ltd. was used to apply tension to the test specimen. The tension was increased in steps of 10 N from 0 N to 30 N. The tension was monitored by "Separated Sensor Model Digital Force Gauge ZTS-DPU-100N" manufactured by IMADA Co., Ltd.

The following measurements were performed for each step of tension-applied conditions from 0 N to 100 N.

The phase difference value [nm] of the central portion of the test specimen in a state of tension applied was measured by using "KOBRA-WR" manufactured by Oji Scientific Instruments Co., Ltd. under the condition of a measurement wavelength of 589.5 nm. Thereafter, the test specimen was removed from a pair of the chucks to measure the thickness (d [mm]) of a phase difference measurement portion. The cross-sectional area of the test specimen (S) [$m^2$] (= 15 [mm] $\times$ d [mm] $\times$ $10^{-6}$), stress [Pa] (= tension [N]/S [$m^2$]), and birefringence (= phase difference value [nm] $\times$ $10^{-6}$/d [mm]) were each calculated. The stress was plotted on the horizontal axis and birefringence on the vertical axis, and the slope of the line obtained by a method of least squares was determined as the photoelastic coefficient.

(Orientation birefringence of transparent thermoplastic resin)

The transparent thermoplastic resin was press-molded to obtain a resin plate with a thickness of 1.0 mm. A test specimen with a width of 20 mm and a length of 50 mm was cut out from the center of the obtained resin plate and set in an autograph with a heating chamber (manufactured by SHIMADZU CORPORATION). The distance between the chucks was 20 mm. After the test specimen was held at a temperature 10°C higher than the glass transition temperature (Tg) for 3 minutes, it was uniaxially stretched at a rate of 3 mm/min. The stretching ratio was 100%. The distance between the chucks after stretching was 40 mm under these conditions. After the stretched test specimen was detached from the above apparatus and cooled to 23°C, the thickness (d) was measured, and then the Re value of the central portion was measured by using "KOBRA-WR" manufactured by Oji Scientific Instruments Co. Ltd. under the condition of a measurement wavelength of 589.5 nm. The resulting Re value was divided by the thickness (d) of the test specimen to calculate a value of orientation birefringence.

(Average and standard deviation of Re value of liquid crystal display protective plate)

The average and standard deviation of Re values were measured for a test specimen of a liquid crystal display protective plate (21 cm in width and 30 cm in length) before curved-surface forming and a test specimen of a liquid crystal display protective plate (17 cm in width and 22 cm in length) after curved-surface forming, as follows.

A standard lens (FUJINON HF12.5HA-1B) was attached to the "WPA-100-L" manufactured by Photonic Lattice, Inc. The height of the lens was adjusted so that the measurement range was 17 cm in width and 22 cm in length. Re values of about 110,000 birefringent pixels were measured to determine the average and standard deviation.

Based on the following formula, the rate of change in the average Re value after curved-surface forming relative to before curved-surface forming was determined.

[Rate of change in Re value after heating relative to before heating] (%) = ([Re value after heating] - [Re value before heating])/[Re value before heating] × 100

(Thickness of each layer)

The thickness of each layer was measured by using a "Profile Projector V-12B" manufactured by Nikon Corporation.

(Color unevenness)

The test specimen of the liquid crystal display protective plate was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where color unevenness due to the variation in Re value became the strongest was visually evaluated at the following three levels.

A (Good): No color unevenness at all and no deterioration of visibility of the liquid crystal display.
B (Acceptable): Slight color unevenness, resulting in slight deterioration of visibility of the liquid crystal display.
C (Poor): Significant color unevenness, resulting in significant deterioration of visibility of the liquid crystal display.

(Blackout)

The test specimen of the liquid crystal display protective plate was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where the transmitted light intensity of the liquid crystal display became the lowest was visually evaluated at the following three levels.

A (Good): The transmitted light intensity is sufficiently high to allow clear visibility of characters or the like displayed on the liquid crystal display.
B (Acceptable): The light transmittance is slightly low, and the visibility of characters or the like displayed on the liquid crystal display has slightly deteriorated.
C (Poor): The transmitted light intensity is almost zero, and the characters or the like displayed on the liquid crystal display are not visible.

(Coloring)

The test specimen of the liquid crystal display protective plate was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where the coloring of the liquid crystal display became the greatest was visually evaluated at the following three levels.

A (Good): No significant coloring and no deterioration of visibility of the liquid crystal display.
B (Acceptable): Coloring, resulting in slight deterioration of visibility of the liquid crystal display.
C (Poor): Significant coloring, resulting in significant deterioration of visibility of the liquid crystal display.

(Cracks)

The liquid crystal display protective plates after curved-surface forming were visually observed and evaluated at the following two levels.

A (Good): No cracks in the phase difference adjusting layer and no deterioration of visibility of the liquid crystal display.
C (Poor): Cracks in the phase difference adjusting layer, resulting in deterioration of visibility of the liquid crystal display.

(Forming percentage of liquid crystal display protective plate with curved surface)

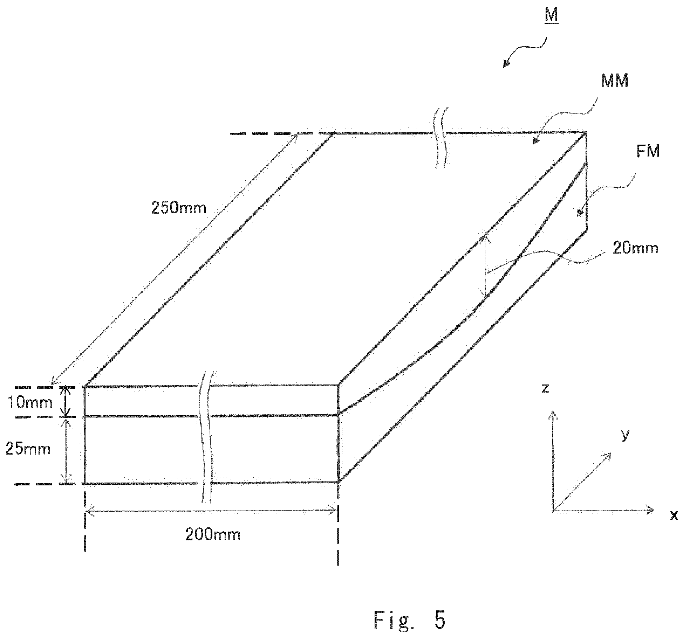

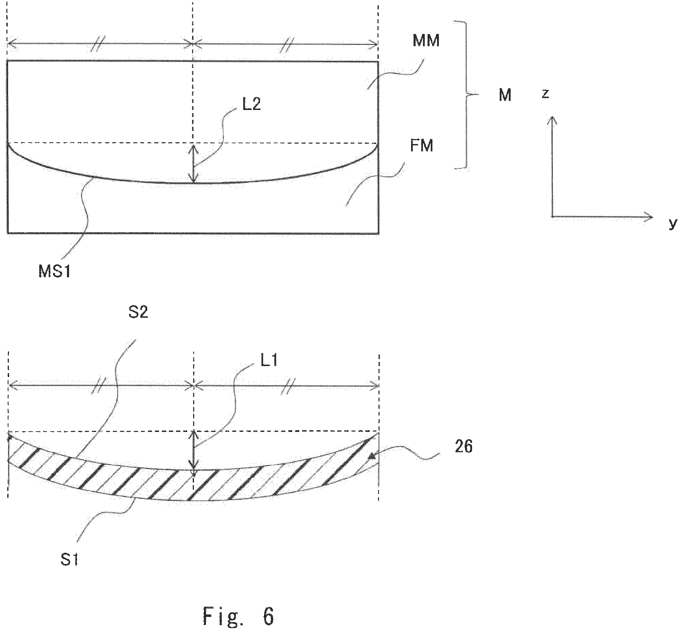

The forming percentage was measured for a test specimen of the display protective plate with a curved surface (17 cm in width and 22 cm in length), as follows. Fig. 6 is referred for description. The upper view in Fig. 6 is a schematic cross-sectional view of resin molds (male and female molds) used for molding a liquid crystal display protective plate with a curved surface, and the yz cross-sectional view in Fig. 5. The lower view in Fig. 6 is a schematic cross-sectional view of a liquid crystal display protective plate with a curved surface corresponding to the upper view in Fig. 6. In the figures, reference numeral 26 denotes a liquid crystal display protective plate with a curved surface, and reference sign M denotes a resin mold.

The liquid crystal display protective plate with a curved surface 26 was placed on a flat surface plate with a convex surface S1 upside. In that state, L1, the height from the surface plate to the center of a concave surface S2, was measured. Meanwhile, L2, the height of a male convex surface MS1 of the resin mold M used for molding the liquid crystal display protective plate with a curved surface 26, was measured. Based on the following formula, the forming percentage was determined.

$$\text{Forming percentage [\%]} = (L1/L2) \times 100$$

[Materials]

The materials used are as follows.

<MS resin>
(MS1) An MS resin (copolymer of methyl methacrylate (MMA) and styrene (St)) was polymerized according to the method for producing a copolymer (A) described in [Examples] of Japanese Unexamined Patent Application Publication No. 2003-231785. With Tg = 109°C and a content of aromatic vinyl monomer unit = 35 mass%.
<SMM resin>
(SMM1) "RESISFY R200", manufactured by Denka Company Limited, with Tg = 135°C, a styrene-maleic anhydride-MMA copolymer, and a content of aromatic vinyl monomer unit = 56 mass%.
<Acrylimide resin>
(PMMI1) "Pleximid TT50" manufactured by Daicel-Evonik Ltd., with Tg = 155°C, and a content of aromatic vinyl monomer unit = 0 mass%.
<SMA-containing resin>

(SMA1) "XIRAN" manufactured by Polyscope Polymers BV, with Tg = 152°C, a styrene-maleic anhydride copolymer, and a content of aromatic vinyl monomer unit = 77 mass%.
(SMA2) SMA resin (SMA1)/methacrylic resin (PMMA1) (mass ratio) = 82/18, with Tg = 145°C, a styrene-maleic

anhydride copolymer alloy resin, and a content of aromatic vinyl monomer unit = 63 mass%.

<Methacrylic resin>

(PMMA1) A copolymer of methyl methacrylate (MMA) and methyl acrylate (MA), "PARAPET EH" manufactured by Kuraray Co., Ltd, with Tg = 110°C.
(PMMA2) A copolymer of methyl methacrylate (MMA) and methyl acrylate (MA), "PARAPET HR-S" manufactured by Kuraray Co., Ltd, with Tg = 119°C.
(PMMA3) A copolymer of methyl methacrylate (MMA) and methyl acrylate (MA), with Tg = 85°C.

<Polycarbonate resin>
(PC1) "SD POLYCA 300 Series" manufactured by Sumika Polycarbonate Limited, with Tg = 150°C.

[Examples 1 to 4, and Comparative Examples 1 and 2]

(Production of liquid crystal display protective plate)

The resin for the substrate layer (transparent thermoplastic resin (B) or resin for comparison) was melted and extruded using a 50 mmφ single screw extruder (manufactured by SHIBAURA MACHINE CO., LTD.). The resin for the phase difference adjusting layer (transparent thermoplastic resin (A) or resin for comparison) was melted and extruded using a 30 mmφ single screw extruder (manufactured by TOSHIBA MACHINE CO., LTD.). These molten resins were laminated through a multi-manifold type die, and a thermoplastic resin having a three-layer structure in which the substrate layer was laminated on both sides of the phase difference adjusting layer was co-extruded from the T die. This thermoplastic resin laminate was sandwiched between the first cooling roll and the second cooling roll adjacent to each other, wound around the second cooling roll, sandwiched between the second cooling roll and the third cooling roll, and wound around the third cooling roll for cooling. After cooling, the resulting flat resin plate was wound up by a pair of winding rolls. In this manner, the liquid crystal display protective plate (reference drawing: Fig. 1) formed of the flat resin plate having a three-layer structure in which the substrate layer is laminated on both sides of the phase difference adjusting layer was obtained.
A test specimen with a width of 21 cm and a length of 30 cm was cut out from the center of the obtained liquid crystal display protective plate so that the extrusion direction (resin flow direction) was in the longitudinal direction. A liquid crystal display protective plate before curved-surface forming was evaluated using this test specimen.

(Curved-surface forming)

A test specimen for curved-surface forming with a width of 17 cm and a length of 22 cm was cut out from the center of the test specimen so that the extrusion direction (resin flow direction) was in the longitudinal direction. Curved-surface forming was carried out on this test specimen as follows.
Resin molds produced using "Chemical Wood Prolab 65" manufactured by SSI Co., Ltd., were provided. As illustrated in Fig. 5, the resin mold M consisted of a combination of a female mold FM (lower mold illustrated in the figure) and a male mold MM (upper mold illustrated in the figure), and the overall shape was rectangular with a width (dimension in x direction illustrated in the figure) of 200 mm × a length (dimension in y direction illustrated in the figure) of 250 mm × a height (dimension in z direction illustrated in the figure) of 35 mm.
The concave surface was formed on the top surface of the female mold FM, and the convex surface joined to the concave surface of the female mold FM was formed on the bottom surface of the male mold MM. The height of the female mold FM was 15 to 25 mm, and the height of the male mold MM was 20 to 10 mm. The cross-sectional shape of the concave surface of the female mold FM and the convex surface of the male mold MM parallel to the y-z plane was uniform regardless of the position in the x direction illustrated in the figure, and was arc-shaped with a curvature radius of 300 mm.
A polytetrafluoroethylene (PTFE) sheet (300 mm × 300 mm × 12 mm) was placed in the oven, and the oven was heated to 170°C. In this state, the test specimen for curved-surface forming was placed on the PTFE sheet and held for 6 to 7 minutes until the temperature of the test specimen reached the forming temperature (e.g., 130°C in Example 1) listed in Table 3. The PTFE sheet and the test specimen for curved-surface forming placed on it were then removed from the oven. Then, the temperature of the test specimen immediately before being sandwiched between the female mold FM and the male mold MM was measured using a noncontact thermometer ("PT-S80" manufactured by OPTEX CO., LTD.) and confirmed to be at the forming temperature listed in Table 3 (e.g., 130°C in Example 1). Then, the test specimen for curved-surface forming at the above forming temperature was placed on the female mold FM at room temperature (20 to 25°C), the male mold MM at room temperature (20 to 25°C) was placed on top thereof, and a load of 3 kg was applied on top thereof. The test specimen was then cooled for 1 to 2 minutes until the temperature of the specimen was near room temperature.

The test specimen after cooling was removed from the resin mold M, and the liquid crystal display protective plate after curved-surface forming (liquid crystal display protective plate with a curved surface) was evaluated using this test specimen.

Tables 1 to 3 show the type and properties of the resins used, the thickness of the phase difference adjusting layer, the total thickness of the substrate layers, the thermoforming temperature, and evaluation results for the liquid crystal display protective plates before and after curved-surface forming in each example. **In** each example of Tables 1 to 3, conditions not listed in the tables are common conditions.

[Comparative Examples 3 to 5]

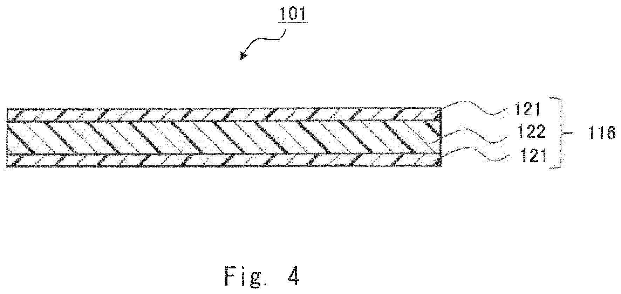

The liquid crystal display protective plate (reference drawing: Fig. 4) formed of the flat resin plate having a three-layer structure was produced in the same manner as in Examples 1 to 4, except that co-extrusion was performed so that the phase difference adjusting layer was laminated on both sides of the substrate layer, to carry out curved-surface forming. **In** Fig. 4, reference numeral 101 denotes a liquid crystal display protective plate for comparison, reference numeral 116 denotes a resin plate for comparison, reference numeral 121 denotes a phase difference adjusting layer, and reference numeral 122 denotes a substrate layer. **In** the same manner as in Example 1 to 4, the liquid crystal display protective plates before and after curved-surface forming were evaluated.

Tables 1 to 3 show the type and properties of the resins used, the thickness of the phase difference adjusting layer, the total thickness of the substrate layers, the thermoforming temperature, and evaluation results for the liquid crystal display protective plates before and after curved-surface forming in each example.

[Examples 4-1 to 4-8]

(Production of liquid crystal display protective plate)

The flat liquid crystal display protective plate was produced using the same method and laminated structure as in Example 4. In each example, however, the extrusion volume and the rotational speeds of the first to third cooling rolls were adjusted so that the temperature of the entire resin (TX) on the third cooling roll was at the temperatures listed in Table 5. The surface temperature of the resin on the third cooling roll was measured as TX using an infrared radiation thermometer. Fig. 3 schematically shows the TX measurement range.

As described above, the flat liquid crystal display protective plate (reference drawing: Fig. 1) having a three-layer structure in which the substrate layer is laminated on both sides of the phase difference adjusting layer (S1-1) to (S1-5) was obtained. The two substrate layers were identical in thickness.

Table 4 shows the laminated structure, the type and properties of the resins used, the total thickness of the phase difference adjusting layer, the total thickness of the substrate layers, and the overall thickness.

A test specimen with a width of 17 cm and a length of 22 cm was cut out from the center of the obtained liquid crystal display protective plate so that the extrusion direction (resin flow direction) was in the longitudinal direction. A flat liquid crystal display protective plate before thermoforming was evaluated using this test specimen.

(Production of liquid crystal display protective plate with curved surface)

Thermoforming was carried out on the above test specimen cut out from the flat extruded resin plate (17 cm in width and 22 cm in length) using the same resin mold M as in Example 4 (see Fig. 5) in the same method as in Example 4.

A polytetrafluoroethylene (PTFE) sheet (300 mm × 300 mm × 12 mm) was placed in the oven, and the oven was heated to 170°C. In this state, the test specimen was placed on the PTFE sheet and held for 6 to 7 minutes until the temperature of the test specimen reached the forming temperature (TY) (e.g., 140°C in Example 4-1) listed in Table 5. Then, the test specimen at the above forming temperature was placed on the female mold FM at room temperature (20 to 25°C), the male mold MM at room temperature (20 to 25°C) was placed on top thereof, and a load of 3 kg was applied on top thereof. The test specimen was then cooled for 1 to 2 minutes until the temperature of the specimen was near room temperature. The test specimen after cooling was removed from the resin mold M, and the liquid crystal display protective plate with a curved surface was evaluated using this test specimen.

Table 5 shows the glass transition temperature (Tg) of the resin used, the temperature of the entire resin on the third cooling roll (TX) in extrusion process, the thermoforming temperature (TY), and the temperature relationship between them in each example. **In** each example of Table 5, conditions not listed in the table are common conditions.

Table 6 shows evaluation results for flat extruded resin plates and liquid crystal display protective plates with curved surfaces before thermoforming in each example.

[Table 1]

| | Laminated structure | Phase difference adjusting layer | | | | | | | Substrate layer | | | | |
|---|---|---|---|---|---|---|---|---|---|---|---|---|---|
| | | Transparent thermoplastic resin (A) or resin for comparison | | | | $Tg_A$ [°C] | Thickness $T_A$ [mm] | $V \times T_A$ | Transparent thermoplastic resin (B) or resin for comparison | | | $Tg_B$ [°C] | Total thickness $T_B$ [mm] |
| | | Type | Content of aromatic vinyl unit V [mass%] | Photoelastic coefficient $C_A$ [$\times 10^{-12}$/Pa] | Orientation birefringence $\Delta n_A$ [$\times 10^{-4}$] | | | | Type | Photoelastic coefficient $C_B$ [$\times 10^{-12}$/Pa] | Orientation birefringence $\Delta n_B$ [$\times 10^{-4}$] | | |
| Example 1 | Fig. 1 | SMM1 | 56 | 0.7 | -23.4 | 135 | 0.3 | 16.8 | PMMA1 | -3.2 | -4.0 | 110 | 2.7 |
| Example 2 | Fig. 1 | MS1 | 35 | 1.1 | -37.6 | 109 | 0.3 | 10.5 | PMMA3 | -2.9 | -3.0 | 85 | 2.7 |
| Example 3 | Fig. 1 | PMMI1 | 0 | -1.7 | 84.8 | 155 | 0.3 | 0.0 | PMMA2 | -3.2 | -4.0 | 119 | 2.7 |
| Example 4 | Fig. 1 | SMA2 | 63 | -3.5 | -51.0 | 145 | 0.3 | 18.9 | PMMA2 | -3.2 | -4.0 | 119 | 2.7 |
| Comparative Example 1 | Fig. 1 | MS1 | 35 | 1.1 | -37.6 | 109 | 0.3 | 10.5 | PMMA1 | -3.2 | -4.0 | 110 | 2.7 |
| Comparative Example 2 | Fig. 1 | PC1 | 0 | 90.0 | 164.0 | 150 | 0.3 | 0.0 | PMMA1 | -3.2 | -4.0 | 110 | 2.7 |
| Comparative Example 3 | Fig. 4 | SMM1 | 56 | 0.7 | -23.4 | 135 | 0.3 | 16.8 | PMMA1 | -3.2 | -4.0 | 110 | 2.7 |
| Comparative Example 4 | Fig. 4 | MS1 | 35 | 1.1 | -37.6 | 109 | 0.3 | 10.5 | PC1 | 90.0 | 164.0 | 150 | 2.7 |
| Comparative Example 5 | Fig. 4 | PMMA1 | 0 | -3.2 | -4.0 | 109 | 0.3 | 0.0 | PC1 | 90.0 | 164.0 | 150 | 2.7 |

[Table 2]

| | Liquid crystal display protective plate (before curved-surface forming) | | | | | | |
|---|---|---|---|---|---|---|---|
| | Overall thickness d [mm] | $T_B/T_A$ | Re value | | Visibility of liquid crystal display | | |
| | | | Average [nm] | Standard deviation [nm] | Color unevenness | Blackout | Coloring |
| Example 1 | 3.0 | 9.0 | 130 | 2.6 | A | A | A |
| Example 2 | 3.0 | 9.0 | 130 | 2.9 | A | A | A |
| Example 3 | 3.0 | 9.0 | 105 | 2.1 | A | A | A |
| Example 4 | 3.0 | 9.0 | 135 | 7.0 | A | A | A |
| Comparative Example 1 | 3.0 | 9.0 | 110 | 2.6 | A | A | A |
| Comparative Example 2 | 3.0 | 9.0 | 107 | 17.0 | C | A | A |
| Comparative Example 3 | 3.0 | 9.0 | 187 | 6.0 | A | A | A |
| Comparative Example 4 | 3.0 | 9.0 | 250 | 26.8 | C | A | A |
| Comparative Example 5 | 3.0 | 9.0 | 188 | 25.8 | C | A | A |

[Table 3]

| | Liquid crystal display protective plate (after curved-surface forming) | | | | | | | |
|---|---|---|---|---|---|---|---|---|
| | Forming temperature [°C] | Re value | | | Visibility of liquid crystal display | | | Crack |
| | | Average [nm] | Rate of change in average Re value relative to before thermoforming [%] | Standard deviation [nm] | Color unevenness | Blackout | Coloring | |
| Example 1 | 130°C | 110 | -15.4 | 5.6 | A | A | A | A |
| Example 2 | 104°C | 109 | -16.2 | 5.1 | A | A | A | A |
| Example 3 | 145°C | 95 | -9.5 | 4.9 | A | A | A | A |
| Example 4 | 140°C | 123 | -8.9 | 9 | A | A | A | A |
| Comparative Example 1 | 130°C | 26 | -76.4 | 9.0 | B | C | A | A |
| Comparative Example 2 | 130°C | 180 | 68.2 | 45.0 | C | A | B | A |
| Comparative Example 3 | 130°C | 118 | -36.9 | 9.0 | A | A | A | C |
| Comparative Example 4 | 170°C | 86 | -65.6 | 40.0 | C | A | A | A |
| Comparative Example 5 | 170°C | 81 | -56.9 | 39.0 | C | A | A | A |

[Table 4]

| | | | Phase difference adjusting layer | | | | | | | | Substrate layer | | | | |
|---|---|---|---|---|---|---|---|---|---|---|---|---|---|---|---|
| | | | Transparent thermoplastic resin (A) or resin for comparison | | | | | | | | Transparent thermoplastic resin (B) or resin for comparison | | | | |
| | | Laminated structure | Type | Content of aromatic vinyl unit V [mass%] | Photoelastic coefficient $C_A$ [$\times 10^{-12}$/Pa] | Orientation birefringence $\Delta n_A$ [$\times 10^{-4}$] | $Tg_A$ [°C] | Thickness $T_A$ [mm] | $V \times T_A$ | | Type | Photoelastic coefficient $C_B$ [$\times 10^{-12}$/Pa] | Orientation birefringence $\Delta n_B$ [$\times 10^{-4}$] | $Tg_B$ [°C] | Total thickness $T_B$ [mm] |
| Examples 4-1 to 4-8 | S1-1 to S1-5 | Fig. 1 | SMA2 | 63 | -3.5 | -51.0 | 145 | 0.3 | 18.9 | | PMMA2 | -3.2 | -4.0 | 119 | 2.7 |

[Table 5]

| | Extruded resin plate | TgA | TgB | TX | TY | Temperature relationship | |
|---|---|---|---|---|---|---|---|
| | | [°C | [°C] | [°C] | [°C] | | |
| Example 4-1 | S1-2 | 145 | 119 | 150 | 140 | TgB<TY<TgA<TX | Suitable |
| Example 4-2 | S1-2 | 145 | 119 | 150 | 135 | TgB<TY<TgA<TX | Suitable |
| Example 4-3 | S1-2 | 145 | 119 | 150 | 130 | TgB<TY<TgA<TX | Suitable |
| Example 4-4 | S1-2 | 145 | 119 | 150 | 125 | TgB<TY<TgA<TX | Suitable |
| Example 4-5 | S1-3 | 145 | 119 | 160 | 140 | TgB<TY<TgA<TX | Suitable |
| Example 4-6 | S1-4 | 145 | 119 | 170 | 140 | TgB<TY<TgA<TX | Suitable |
| Example 4-7 | S1-1 | 145 | 119 | 140 | 135 | TgB<TY<TX<TgA | Suitable |
| Example 4-8 | S1-5 | 145 | 119 | 130 | 125 | TgB<TY<TX<TgA | Suitable |

[Table 6]

| | Flat extruded resin plate | | | | | | Display protective plate with curved surface | | | | | | |
|---|---|---|---|---|---|---|---|---|---|---|---|---|---|
| | | Re value | | Blackout | Coloring | Color unevenness | Re value | | Re change rate | Blackout | Coloring | Color unevenness | Forming percentage |
| | | Average [nm] | Standard deviation [nm] | | | | Average [nm] | Standard deviation [nm] | [-] | | | | |
| Example 4-1 | S1-2 | 135 | 7 | A | A | A | 123 | 9 | 9% | A | A | A | 100% |
| Example 4-2 | S1-2 | 114 | 6 | A | A | A | 102 | 7 | 11% | A | A | A | 90% |
| Example 4-3 | S1-2 | 122 | 4 | A | A | A | 108 | 8 | 11% | A | A | A | 70% |
| Example 4-4 | S1-2 | 126 | 8 | A | A | A | 110 | 7 | 13% | A | A | A | 50% |
| Example 4-5 | S1-3 | 134 | 6 | A | A | A | 123 | 9 | 8% | A | A | A | 100% |
| Example 4-6 | S1-4 | 58 | 9 | B | A | B | 51 | 10 | 12% | B | A | B | 98% |
| Example 4-7 | S1-1 | 134 | 6 | A | A | A | 129 | 7 | 4% | A | A | A | 90% |
| Example 4-8 | S1-5 | 125 | 8 | A | A | A | 121 | 9 | 3% | A | A | A | 50% |

[Summary of results]

In Examples 1 to 4, a liquid crystal display protective plate formed of a flat resin plate in which a substrate layer is laminated on both sides of a phase difference adjusting layer was produced. In these Examples, the phase difference adjusting layer was a layer including a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$. The substrate layer was a layer including a transparent thermoplastic resin (B) having an absolute value of photoelastic coefficient ($C_B$) of $10.0 \times 10^{-12}$/Pa or less and an absolute value of orientation birefringence ($\Delta n_B$) of less than $10.0 \times 10^{-4}$, $Tg_A > Tg_B$, wherein $Tg_A$ represented a glass transition temperature of the phase difference adjusting layer, and $Tg_B$ represented a glass transition temperature of the substrate layer.

In all the liquid crystal display protective plates before curved-surface forming obtained in Examples 1 to 4, an average Re value within a width of 17 cm and a length of 22 cm was 50 to 330 nm and a standard deviation of the Re value within a width of 17 cm and a length of 22 cm was 15.0 nm or less. In these Examples, color unevenness, coloring, and blackout were effectively suppressed by using the obtained liquid crystal display protective plates when the liquid crystal display protective plates on liquid crystal screens were observed through a polarizing filter.

In Examples 1 to 4, the obtained liquid crystal display protective plates were thermoformed at a temperature of $Tg_B$ or higher and $Tg_A$ or lower ($Tg_B$ or higher and less than $Tg_A$) to produce liquid crystal display protective plates with curved surfaces.

In all the liquid crystal display protective plates with curved surfaces obtained in Examples 1 to 4, an average Re value within a width of 17 cm and a length of 22 cm was 50 to 330 nm and a standard deviation of the Re value within a width of 17 cm and a length of 22 cm was 15.0 nm or less. In these Examples, an absolute value of a rate of change in the average Re value after thermoforming relative to the value before thermoforming was 50% or less.

In these Examples, color unevenness, coloring, and blackout were effectively suppressed by using the obtained liquid crystal display protective plates with curved surfaces when the liquid crystal display protective plates on liquid crystal screens were observed through a polarizing filter.

Among Examples 1 to 4, the average Re value was in a particularly preferable range both before and after the curved-surface processing in Examples 1, 2, and 4, in which $V \times T_A$ was within the range of 6.0 to 30.0.

In Examples 4-1 to 4-8, flat liquid crystal display protective plates and liquid crystal display protective plates with curved surfaces were produced by setting values of TX and TY to satisfy conditions of thermoforming at a temperature (TY) of higher than $Tg_B$ and lower than $Tg_A$ and lower than TX.

In all the flat liquid crystal display protective plates obtained in these Examples, an average Re value was 50 to 330 nm and a standard deviation of the Re value was 25.0 nm or less (15.0 nm or less and 10.0 nm or less).

In all the liquid crystal display protective plates with curved surfaces obtained in these Examples, the average Re value was 50 to 330 nm and the standard deviation of the Re value was 25.0 nm or less (15.0 nm or less and 10.0 nm or less). In these Examples, an absolute value of a rate of change in the Re value after thermoforming relative to the value before thermoforming was 50% or less (20% or less).

Since the thermoforming temperature (TY) was lower than $Tg_A$ and TX of the phase difference adjusting layer resin, the orientation of the phase difference adjusting layer resin hardly collapsed in the thermoforming process, suggesting that the Re value was almost maintained.

In these Examples, blackout, coloring, and color unevenness were effectively suppressed when the liquid crystal display protective plates with curved surfaces on liquid crystal screens were observed through a polarizing filter.

From the results of Examples 4-1 to 4-8, it was found that it is preferable to perform curved-surface processing under conditions satisfying TX > TY and $Tg_B < TY < Tg_A$.

In Comparative Example 1, a liquid crystal display protective plate with a curved surface was produced by thermoforming at a temperature higher than $Tg_A$ and $Tg_B$, as $Tg_A < Tg_B$. In this Comparative Example, an absolute value of a rate of change in the average Re value after thermoforming relative to the value before thermoforming was more than 50%. The liquid crystal display protective plate with a curved surface obtained in this Comparative Example had a low Re value, and thus blackout was noticeable when the liquid crystal display protective plate on a liquid crystal screen was observed through a polarizing filter.

In Comparative Examples 2, a polycarbonate resin whose photoelastic coefficient ($C_A$) and orientation birefringence ($\Delta n_A$) are not specified in the present invention was used as a resin for the phase difference adjusting layer. The liquid crystal display protective plate before curved-surface forming obtained in this Comparative Example had a large standard deviation of the Re value (large variation in Re value), and thus color unevenness was noticeable when the liquid crystal display protective plate on a liquid crystal screen was observed through a polarizing filter.

In this Comparative Example, a liquid crystal display protective plate with a curved surface was produced by thermoforming at a temperature of $Tg_B$ or higher and $Tg_A$ or lower. In this Comparative Example, an absolute value of a rate of change in the average Re value after thermoforming relative to the value before thermoforming was more than 50%, and a standard deviation of the Re value after thermoforming was more than 25.0 nm. The liquid crystal display protective plate

with a curved surface obtained in this Comparative Example had a large standard deviation of the Re value (large variation in Re value), and thus color unevenness was noticeable when the liquid crystal display protective plate on a liquid crystal screen was observed through a polarizing filter.

In Comparative Example 3, a liquid crystal display protective plate formed of a resin plate in which a phase difference adjusting layer is laminated on both sides of a substrate layer was produced. In this Comparative Example, a liquid crystal display protective plate with a curved surface was produced by thermoforming at a temperature of $Tg_B$ or higher and $Tg_A$ or lower. In this Comparative Example, an absolute value of a rate of change in the average Re value after thermoforming relative to the value before thermoforming was 50% or less. However, the phase difference adjusting layer on the surface was bent at a temperature lower than Tg of the phase difference adjusting layer, thus resulting in cracks in the phase difference adjusting layer.

In Comparative Examples 4 and 5, a liquid crystal display protective plate formed of a resin plate in which a phase difference adjusting layer is laminated on both sides of a substrate layer was produced. Polycarbonate resins whose photoelastic coefficient ($C_B$) and orientation birefringence ($\Delta n_B$) are not specified in the present invention were used as resins for the substrate layers. $Tg_A < Tg_B$. The liquid crystal display protective plates before curved-surface forming obtained in these Comparative Examples had a large standard deviation of the Re value (large variation in Re value), and thus color unevenness was noticeable when the liquid crystal display protective plates on liquid crystal screens were observed through a polarizing filter.

In these Comparative Examples, liquid crystal display protective plates with curved surfaces were produced by thermoforming at a temperature higher than $Tg_A$ and $Tg_B$. An absolute value of a rate of change in the average Re value after thermoforming relative to the value before thermoforming was more than 50%, and a standard deviation of the Re value after thermoforming was more than 25.0 nm. The liquid crystal display protective plates with curved surfaces obtained in these Comparative Examples had a large standard deviation of the Re value (large variation in Re value), and thus color unevenness was noticeable when the liquid crystal display protective plates on liquid crystal screens were observed through a polarizing filter.

The present invention is not limited to the above embodiments.

Reference Signs List

1, 2 LIQUID CRYSTAL DISPLAY PROTECTIVE PLATE
11 T DIE
12 to 14 COOLING ROLL
15 WINDING ROLL
16 FLAT RESIN PLATE
21 PHASE DIFFERENCE ADJUSTING LAYER
22 SUBSTRATE LAYER
31 CURED COATING FILM

## Claims

**1.** A liquid crystal display protective plate (1, 2) comprising:

a flat resin plate (16) in which a substrate layer (22) is laminated on both sides of a phase difference adjusting layer (21), wherein

the phase difference adjusting layer (21) comprises a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,

the substrate layer (22) comprises a transparent thermoplastic resin (B) having an absolute value of photoelastic coefficient ($C_B$) of $10.0 \times 10^{-12}$/Pa or less and an absolute value of orientation birefringence ($\Delta n_B$) of less than $10.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,

$Tg_A > Tg_B$, wherein $Tg_A$ represents the glass transition temperature of the phase difference adjusting layer (21), and $Tg_B$ represents the glass transition temperature of the substrate layer (22),
$T_A < T_B$, wherein $T_A$ represents a thickness of the phase difference adjusting layer (21), and $T_B$ represents a total thickness of the substrate layers (22), and
the flat resin plate (16) has an in-plane retardation value of 50 to 330 nm.

**2.** The liquid crystal display protective plate (1, 2) according to Claim 1, wherein a standard deviation of the in-plane retardation value of the flat resin plate (16) within a width of 17 cm and a length of 22 cm is 15.0 nm or less.

**3.** The liquid crystal display protective plate (1, 2) according to Claim 1 or 2, wherein when the flat resin plate (16) is heated to a temperature of $Tg_B$ or higher and $Tg_A$ or lower, an absolute value of a rate of change in the in-plane retardation value after heating relative to the value before heating is 50% or less.

**4.** The liquid crystal display protective plate (1, 2) according to any one of Claims 1 to 3, wherein when the flat resin plate (16) is heated to a temperature of $Tg_B$ or higher and $Tg_A$ or lower, a standard deviation of the in-plane retardation value of the flat resin plate (16) within a width of 17 cm and a length of 22 cm is 25.0 nm or less.

**5.** The liquid crystal display protective plate (1, 2) according to any one of Claims 1 to 4, wherein

the transparent thermoplastic resin (A) contains an aromatic vinyl monomer unit, and
the following formula (1) is satisfied:

$$6.0 \leq V \times T_A \leq 30.0 \qquad (1)$$

wherein V [mass%] represents a content of the aromatic vinyl monomer unit in the transparent thermoplastic resin (A), and $T_A$ [mm] represents a thickness of the phase difference adjusting layer (21).

**6.** The liquid crystal display protective plate (1, 2) according to any one of Claims 1 to 5, comprising a cured coating film (31) on at least one of the outermost surfaces.

**7.** The liquid crystal display protective plate (1, 2) according to any one of Claims 1 to 6, wherein the flat resin plate (16) is an extruded plate.

**8.** A liquid crystal display protective plate (1, 2) with a curved surface, comprising:

a resin plate having a curved surface in which a substrate layer (22) is laminated on both sides of a phase difference adjusting layer (21), wherein
the phase difference adjusting layer (21) comprises a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,
the substrate layer (22) comprises a transparent thermoplastic resin (B) having an absolute value of photoelastic coefficient ($C_B$) of $10.0 \times 10^{-12}$/Pa or less and an absolute value of orientation birefringence ($\Delta n_B$) of less than $10.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,
$Tg_A > Tg_B$, wherein $Tg_A$ represents the glass transition temperature of the phase difference adjusting layer (21), and $Tg_B$ represents the glass transition temperature of the substrate layer (22),
$T_A < T_B$, wherein $T_A$ represents a thickness of the phase difference adjusting layer (21), and $T_B$ represents a total thickness of the substrate layers (22), and
the resin plate having a curved surface has an in-plane retardation value of 50 to 330 nm.

**9.** The liquid crystal display protective plate (1, 2) with a curved surface according to Claim 8, wherein a standard deviation of the in-plane retardation value of the resin plate having a curved surface within a width of 17 cm and a length

of 22 cm is 25.0 nm or less.

**10.** The liquid crystal display protective plate (1, 2) with a curved surface according to Claim 8 or 9, wherein

the transparent thermoplastic resin (A) contains an aromatic vinyl monomer unit, and
the following formula (1) is satisfied:

$$6.0 \leq V \times T_A \leq 30.0 \qquad (1)$$

wherein V [mass%] represents a content of the aromatic vinyl monomer unit in the transparent thermoplastic resin (A), and $T_A$ [mm] represents a thickness of the phase difference adjusting layer (21).

**11.** The liquid crystal display protective plate (1, 2) with a curved surface according to any one of Claims 8 to 10, comprising a cured coating film (31) on at least one of the outermost surfaces.

**12.** The liquid crystal display protective plate (1, 2) with a curved surface according to any one of Claims 8 to 11, wherein the resin plate having a curved surface is a thermoformed plate made by thermoforming a flat resin plate (16).

**13.** A method for producing the liquid crystal display protective plate (1, 2) with a curved surface according to any one of Claims 8 to 12, comprising:

forming a flat resin plate (16) in which a substrate layer (22) is laminated on both sides of a phase difference adjusting layer (21); and
thermoforming the flat resin plate (16) into a shape having a curved surface by heating the flat resin plate (16) to a temperature of $Tg_B$ or higher and $Tg_A$ or lower.

## Patentansprüche

**1.** Schutzplatte (1, 2) für eine Flüssigkristallanzeige, umfassend:

eine flache Harzplatte (16), bei der eine Substratschicht (22) auf beiden Seiten einer Phasendifferenz-Einstellschicht (21) laminiert ist, wobei
die Phasendifferenz-Einstellschicht (21) ein transparentes thermoplastisches Harz (A) umfasst, das einen Absolutwert des photoelastischen Koeffizienten ($C_A$) von 10,0 × $10^{-12}$/Pa oder weniger und einen Absolutwert der Orientierungsdoppelbrechung ($\Delta n_A$) von 10,0 × $10^{-4}$ bis 100,0 × $10^{-4}$ aufweist, wobei die Orientierungsdoppelbrechung bestimmt wird, indem ein Prüfkörper mit einer Breite von 20 mm, einer Länge von 40 mm und einer Dicke von 1 mm bei einer Temperatur, die 10 °C über seiner Glasübergangstemperatur liegt, mit einer Geschwindigkeit von 3 mm/min und einem Dehnungsverhältnis von 100 % uniaxial gedehnt wird und anschließend der Verzögerungswert in der Ebene eines zentralen Abschnitts des Prüfkörpers gemessen wird,
die Substratschicht (22) ein transparentes thermoplastisches Harz (B) umfasst, das einen Absolutwert des photoelastischen Koeffizienten ($C_B$) von 10,0 x $10^{-12}$/Pa oder weniger und einen Absolutwert der Orientierungsdoppelbrechung ($\Delta n_B$) von weniger als 10,0 × $10^{-4}$ aufweist, wobei die Orientierungsdoppelbrechung bestimmt wird, indem ein Prüfkörper mit einer Breite von 20 mm, einer Länge von 40 mm und einer Dicke von 1 mm bei einer Temperatur, die 10 °C über seiner Glasübergangstemperatur liegt, mit einer Geschwindigkeit von 3 mm/min und einem Dehnungsverhältnis von 100 % uniaxial gedehnt wird und anschließend der Verzögerungswert in der Ebene eines zentralen Abschnitts des Prüfkörpers gemessen wird,
$Tg_A > Tg_B$, wobei $Tg_A$ die Glasübergangstemperatur der Phasendifferenz-Einstellschicht (21) und $Tg_B$ die Glasübergangstemperatur der Substratschicht (22) bezeichnet,
$T_A < T_B$, wobei $T_A$ die Dicke der Phasendifferenz-Einstellschicht (21) und $T_B$ die Gesamtdicke der Substratschichten (22) bezeichnet, und

die flache Harzplatte (16) einen Verzögerungswert in der Ebene von 50 bis 330 nm aufweist.

**2.** Schutzplatte (1, 2) für eine Flüssigkristallanzeige nach Anspruch 1, wobei eine Standardabweichung des Verzögerungswerts in der Ebene der flachen Harzplatte (16) innerhalb einer Breite von 17 cm und einer Länge von 22 cm 15,0 nm oder weniger beträgt.

3. Schutzplatte für eine Flüssigkristallanzeige (1, 2) nach Anspruch 1 oder 2, wobei, wenn die flache Harzplatte (16) auf eine Temperatur von $Tg_B$ oder höher und $Tg_A$ oder niedriger erwärmt wird, ein Absolutwert einer Änderungsrate des Verzögerungswerts in der Ebene nach dem Erwärmen im Verhältnis zum Wert vor dem Erwärmen 50 % oder weniger beträgt.

4. Schutzplatte für eine Flüssigkristallanzeige (1, 2) nach einem der Ansprüche 1 bis 3, wobei, wenn die flache Harzplatte (16) auf eine Temperatur von TgB oder höher und TgA oder niedriger erwärmt wird, eine Standardabweichung des Verzögerungswerst in der Ebene der flachen Harzplatte (16) innerhalb einer Breite von 17 cm und einer Länge von 22 cm 25,0 nm oder weniger beträgt.

5. Schutzplatte für eine Flüssigkristallanzeige (1, 2) nach einem der Ansprüche 1 bis 4, wobei

das transparente thermoplastische Harz (A) eine aromatische Vinylmonomereinheit enthält und die folgende Formel (1) erfüllt ist:

$$6.0 \leq V \times T_A \leq 30.0 \qquad (1)$$

wobei V [Massen%] einen Gehalt an den aromatischen Vinylmonomereinheiten im transparenten thermoplastischen Harz (A) bezeichnet und $T_A$ [mm] eine Dicke der Phasendifferenz-Einstellschicht (21) bezeichnet.

6. Schutzplatte für eine Flüssigkristallanzeige (1, 2) nach einem der Ansprüche 1 bis 5, umfassend eine ausgehärtete Beschichtungsfolie (31) auf mindestens einer der äußersten Oberflächen.

7. Schutzplatte für eine Flüssigkristallanzeige (1, 2) nach einem der Ansprüche 1 bis 6, wobei die flache Harzplatte (16) eine extrudierte Platte ist.

8. Schutzplatte (1, 2) für eine Flüssigkristallanzeige mit einer gekrümmten Oberfläche, umfassend:

eine Harzplatte mit einer gekrümmten Oberfläche, bei der eine Substratschicht (22) auf beiden Seiten einer Phasendifferenz-Einstellschicht (21) laminiert ist, wobei
die Phasendifferenz-Einstellschicht (21) ein transparentes thermoplastisches Harz (A) umfasst, das einen Absolutwert des photoelastischen Koeffizienten ($C_A$) von $10{,}0 \times 10^{-12}$/Pa oder weniger und einen Absolutwert der Orientierungsdoppelbrechung ($\Delta n_A$) von $10{,}0 \times 10^{-4}$ bis $100{,}0 \times 10^{-4}$ aufweist, wobei die Orientierungsdoppelbrechung bestimmt wird, indem ein Prüfkörper mit einer Breite von 20 mm, einer Länge von 40 mm und einer Dicke von 1 mm bei einer Temperatur, die 10 °C über seiner Glasübergangstemperatur liegt, mit einer Geschwindigkeit von 3 mm/min und einem Dehnungsverhältnis von 100 % uniaxial gedehnt wird und anschließend der Verzögerungswert in der Ebene eines zentralen Abschnitts des Prüfkörpers gemessen wird,
die Substratschicht (22) ein transparentes thermoplastisches Harz (B) umfasst, das einen Absolutwert des photoelastischen Koeffizienten ($C_B$) von $10{,}0 \times 10^{-12}$/Pa oder weniger und einen Absolutwert der Orientierungsdoppelbrechung ($\Delta n_B$) von weniger als $10{,}0 \times 10^{-4}$ aufweist, wobei die Orientierungsdoppelbrechung bestimmt wird, indem ein Prüfkörper mit einer Breite von 20 mm, einer Länge von 40 mm und einer Dicke von 1 mm bei einer Temperatur, die 10 °C über seiner Glasübergangstemperatur liegt, mit einer Geschwindigkeit von 3 mm/min und einem Dehnungsverhältnis von 100 % uniaxial gedehnt wird und anschließend der Verzögerungswert in der Ebene eines zentralen Abschnitts des Prüfkörpers gemessen wird,
$Tg_A > Tg_B$, wobei $Tg_A$ die Glasübergangstemperatur der Phasendifferenz-Einstellschicht (21) und $Tg_B$ die Glasübergangstemperatur der Substratschicht (22) bezeichnet,
$T_A < T_B$, wobei $T_A$ die Dicke der Phasendifferenz-Einstellschicht (21) und $T_B$ die Gesamtdicke der Substratschichten (22) bezeichnet, und

die Harzplatte mit einer gekrümmten Oberfläche einen Verzögerungswert in der Ebene von 50 bis 330 nm aufweist.

9. Schutzplatte für eine Flüssigkristallanzeige (1, 2) mit einer gekrümmten Oberfläche nach Anspruch 8, wobei eine Standardabweichung des Verzögerungswerts in der Ebene der Harzplatte mit einer gekrümmten Oberfläche innerhalb einer Breite von 17 cm und einer Länge von 22 cm 25,0 nm oder weniger beträgt.

10. Schutzplatte für eine Flüssigkristallanzeige (1, 2) mit einer gekrümmten Oberfläche nach Anspruch 8 oder 9, wobei

das transparente thermoplastische Harz (A) eine aromatische Vinylmonomereinheit enthält und die folgende Formel (1) erfüllt ist:

$$6.0 \leq V \times T_A \leq 30.0 \qquad (1)$$

wobei V [Massen%] einen Gehalt an den aromatischen Vinylmonomereinheiten im transparenten thermoplastischen Harz (A) bezeichnet und $T_A$ [mm] eine Dicke der Phasendifferenz-Einstellschicht (21) bezeichnet.

**11.** Schutzplatte für eine Flüssigkristallanzeige (1, 2) mit einer gekrümmten Oberfläche nach einem der Ansprüche 8 bis 10, umfassend eine ausgehärtete Beschichtungsfolie(31) auf mindestens einer der äußersten Oberflächen.

**12.** Schutzplatte für eine Flüssigkristallanzeige (1, 2) mit einer gekrümmten Oberfläche nach einem der Ansprüche 8 bis 11, wobei die Harzplatte mit einer gekrümmten Oberfläche eine thermogeformte Platte ist, die durch Thermoformen einer flachen Harzplatte (16) hergestellt wurde.

**13.** Verfahren zur Herstellung der Schutzplatte (1, 2) für eine Flüssigkristallanzeige mit einer gekrümmten Oberfläche nach einem der Ansprüche 8 bis 12, umfassend:

das Bilden einer flachen Harzplatte (16), bei der eine Substratschicht (22) auf beiden Seiten einer Phasendifferenz-Einstellschicht (21) laminiert ist; und
das Thermoformen der flachen Harzplatte (16) in eine Form mit einer gekrümmten Oberfläche durch Erwärmen der flachen Harzplatte (16) auf eine Temperatur von $Tg_B$ oder höher und $Tg_A$ oder niedriger.

## Revendications

**1.** Plaque protectrice d'affichage à cristaux liquides (1, 2) comprenant :

une plaque de résine plate (16) dans laquelle une couche de substrat (22) est stratifiée sur les deux côtés d'une couche d'ajustement de différence de phase (21), dans laquelle
la couche d'ajustement de différence de phase (21) comprend une résine thermoplastique transparente (A) ayant une valeur absolue de coefficient photoélastique ($C_A$) de 10,0 x $10^{-12}$/Pa ou moins et une valeur absolue de biréfringence d'orientation ($\Delta n_A$) de 10,0 x $10^{-4}$ à 100,0 x $10^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
la couche de substrat (22) comprend une résine thermoplastique transparente (B) ayant une valeur absolue de coefficient photoélastique ($C_B$) de 10,0 x $10^{-12}$/Pa ou moins et une valeur absolue de biréfringence d'orientation ($\Delta n_B$) de moins de 10,0 x $10^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
$Tg_A > Tg_B$, dans laquelle $Tg_A$ représente la température de transition vitreuse de la couche d'ajustement de différence de phase (21) et $Tg_B$ représente la température de transition vitreuse de la couche de substrat (22),
$T_A < T_B$, dans laquelle $T_A$ représente une épaisseur de la couche d'ajustement de différence de phase (21) et $T_B$ représente une épaisseur totale des couches de substrat (22), et
la plaque de résine plate (16) a une valeur de retard dans le plan de 50 à 330 nm.

**2.** Plaque protectrice d'affichage à cristaux liquides (1, 2) selon la revendication 1, dans laquelle un écart type de la valeur de retard dans le plan de la plaque de résine plate (16) au sein d'une largeur de 17 cm et d'une longueur de 22 cm est de 15,0 nm ou moins.

**3.** Plaque protectrice d'affichage à cristaux liquides (1, 2) selon la revendication 1 ou 2, dans laquelle lorsque la plaque de résine plate (16) est chauffée à une température de $Tg_B$ ou supérieure et $Tg_A$ ou inférieure, une valeur absolue d'un taux de changement de la valeur de retard dans le plan après chauffage par rapport à la valeur avant chauffage est de

50 % ou moins.

**4.** Plaque protectrice d'affichage à cristaux liquides (1, 2) selon l'une quelconque des revendications 1 à 3, dans laquelle lorsque la plaque de résine plate (16) est chauffée à une température de $Tg_B$ ou supérieure et $Tg_A$ ou inférieure, un écart type de la valeur de retard dans le plan de la plaque de résine plate (16) au sein d'une largeur de 17 cm et d'une longueur de 22 cm est de 25,0 nm ou moins.

**5.** Plaque protectrice d'affichage à cristaux liquides (1, 2) selon l'une quelconque des revendications 1 à 4, dans laquelle

la résine thermoplastique transparente (A) contient une unité monomère de vinyle aromatique, et
la formule suivante (1) est satisfaite :

$$6,0 \leq V \times T_A \leq 30,0 \qquad (1)$$

dans laquelle V [% en masse] représente une teneur en l'unité monomère de vinyle aromatique dans la résine thermoplastique transparente (A) et $T_A$ [mm] représente une épaisseur de la couche d'ajustement de différence de phase (21).

**6.** Plaque protectrice d'affichage à cristaux liquides (1, 2) selon l'une quelconque des revendications 1 à 5, comprenant un film d'enrobage durci (31) sur au moins une des surfaces externes.

**7.** Plaque protectrice d'affichage à cristaux liquides (1, 2) selon l'une quelconque des revendications 1 à 6, dans laquelle la plaque de résine plate (16) est une plaque extrudée.

**8.** Plaque protectrice d'affichage à cristaux liquides (1, 2) avec une surface incurvée, comprenant :

une plaque de résine ayant une surface incurvée dans laquelle une couche de substrat (22) est stratifiée sur les deux côtés d'une couche d'ajustement de différence de phase (21), dans laquelle
la couche d'ajustement de différence de phase (21) comprend une résine thermoplastique transparente (A) ayant une valeur absolue de coefficient photoélastique ($C_A$) de 10,0 x $10^{-12}$/Pa ou moins et une valeur absolue de biréfringence d'orientation ($\Delta n_A$) de 10,0 x $10^{-4}$ à 100,0 x $10^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
la couche de substrat (22) comprend une résine thermoplastique transparente (B) ayant une valeur absolue de coefficient photoélastique ($C_B$) de 10,0 x $10^{-12}$/Pa ou moins et une valeur absolue de biréfringence d'orientation ($\Delta n_B$) de moins de 10,0 x $10^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
$Tg_A > Tg_B$, dans laquelle $Tg_A$ représente la température de transition vitreuse de la couche d'ajustement de différence de phase (21) et $Tg_B$ représente la température de transition vitreuse de la couche de substrat (22),
$T_A < T_B$, dans laquelle $T_A$ représente une épaisseur de la couche d'ajustement de différence de phase (21) et $T_B$ représente une épaisseur totale des couches de substrat (22), et
la plaque de résine ayant une surface incurvée a une valeur de retard dans le plan de 50 à 330 nm.

**9.** Plaque protectrice d'affichage à cristaux liquides (1, 2) avec une surface incurvée selon la revendication 8, dans laquelle un écart type de la valeur de retard dans le plan de la plaque de résine ayant une surface incurvée au sein d'une largeur de 17 cm et d'une longueur de 22 cm est de 25,0 nm ou moins.

**10.** Plaque protectrice d'affichage à cristaux liquides (1, 2) avec une surface incurvée selon la revendication 8 ou 9, dans laquelle

la résine thermoplastique transparente (A) contient une unité monomère de vinyle aromatique, et
la formule suivante (1) est satisfaite :

$$6{,}0 \leq V \times T_A \leq 30{,}0 \qquad (1)$$

dans laquelle V [% en masse] représente une teneur en l'unité monomère de vinyle aromatique dans la résine thermoplastique transparente (A) et $T_A$ [mm] représente une épaisseur de la couche d'ajustement de différence de phase (21).

**11.** Plaque protectrice d'affichage à cristaux liquides (1, 2) avec une surface incurvée selon l'une quelconque des revendications 8 à 10, comprenant un film d'enrobage durci (31) sur au moins une des surfaces externes.

**12.** Plaque protectrice d'affichage à cristaux liquides (1, 2) avec une surface incurvée selon l'une quelconque des revendications 8 à 11, dans laquelle la plaque de résine ayant une surface incurvée est une plaque thermoformée réalisée par thermoformage d'une plaque de résine plate (16).

**13.** Procédé de production de la plaque protectrice d'affichage à cristaux liquides (1, 2) avec une surface incurvée selon l'une quelconque des revendications 8 à 12, comprenant :

former une plaque de résine plate (16) dans laquelle une couche de substrat (22) est stratifiée sur les deux côtés d'une couche d'ajustement de différence de phase (21) ; et
thermoformer la plaque de résine plate (16) en une forme ayant une surface incurvée en chauffant la plaque de résine plate (16) à une température de $Tg_B$ ou supérieure et $Tg_A$ ou inférieure.

1

22
21
22
16

Fig. 1

2
31
22
21
22
16
31

Fig. 2

TX MEASUREMENT RANGE
15
11
16
15
12
13
14

Fig. 3

101
121
122
116
121

Fig. 4

M
MM
FM
250mm
20mm
10mm
25mm
200mm
z
y
x

Fig. 5

MM
M
z
L2
FM
y
MS1

S2
L1
26
S1

Fig. 6

BIREFRINGENCE
STRESS
BIREFRINGENCE
PHOTOELASTIC
COEFFICIENT
ORIENTATION BIREFRINGENCE
STRESS

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019216068 A1
- JP 2000329942 A
- US 20160326289 A1
- US 20180329256 A1
- US 20100060833 A1
- JP 2004299199 A
- JP 2006103169 A
- JP 2010085978 A
- JP 2018103518 A
- JP 2003231785 A